# EUROPEAN PATENT SPECIFICATION

(11) **EP 2 571 186 B1**
(45) Date of publication and mention of the grant of the patent: **26.12.2018**
(21) Application number: 12184242.1
(22) Date of filing: 13.09.2012
(51) Int. Cl.: H04L 1/00, H04L 27/26

(54) **Broadcast signal transmitter/receiver and broadcast signal transmission/reception method**
Rundfunksignalsenderempfänger und Verfahren zum Senden bzw. Empfangen von Rundfunksignalen
Émetteur/récepteur de signal de diffusion et procédé de transmission/réception de signal de diffusion

(30) Priority: 16.09.2011 US 201161535372 P; 10.10.2011 US 201161545206 P
(43) Date of publication of application: 20.03.2013
(73) Proprietor: LG ELECTRONICS INC., Yeongdeungpo-Gu Seoul 07336 (KR)
(72) Inventor: Ko, Woosuk, 137-724 Seoul (KR); Moon, Sangchul, 137-724 Seoul (KR)
(74) Representative: Cabinet Plasseraud

(56) References cited:
- WO-A2-2011/099749
- WO-A2-2011/105795
- VANGELISTA L ET AL: "Key technologies for next-generation terrestrial digital television standard DVB-T2", IEEE COMMUNICATIONS MAGAZINE, IEEE SERVICE CENTER, PISCATAWAY, US, vol. 47, no. 10, 1 October 2009 (2009-10-01), pages 146-153, XP011283329, ISSN: 0163-6804, DOI: 10.1109/MCOM.2009.5273822

## Description

### BACKGROUND OF THE INVENTION

### Field of the Invention

The present invention relates to a broadcast transmitter/receiver and a broadcast signal transmission/reception method, and more particularly, to a broadcast transmitter/receiver and a broadcast signal transmission/reception method that can transmit and receive a broadcast signal, which is compatible with a conventional broadcast signal transmitter/receiver, while increasing data transmission efficiency.

### Discussion of the Related Art

As the end of analog broadcasting is approaching, various technologies for transmitting and receiving digital broadcast signals have been developed. Digital broadcast signals can transmit a larger amount of video/audio data than analog broadcast signals and can also carry not only video/audio data but also various additional data.

A digital broadcast system can provide High Definition (HD) images, multi-channel audio services, and various additional services. However, data transmission efficiency for high capacity data transmission, transmission and reception network robustness, and network flexibility in consideration of mobile receiving equipment still need to be improved. WO2011/105795 discloses a broadcasting system employing first and second symbols for conveying signaling data. WO2011/099749 discloses a broadcasting system employing first and second symbols for conveying signaling data wherein a scrambling sequence is applied to the symbols.

### SUMMARY OF THE INVENTION

Accordingly, the present invention is directed to a broadcast transmitter/receiver and a broadcast signal transmission/reception method that substantially obviate one or more problems due to limitations and disadvantages of the related art.

An object of the present invention is to provide a broadcast transmission/reception method and apparatus which can receive a digital broadcast signal without error in mobile reception equipment or in indoor environments.

Another object of the present invention is to provide a transmitter/receiver and a transmission/reception method for transmitting and receiving a broadcast signal which can be kept compatible with a conventional broadcast system.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of processing a broadcast signal in a transmitter according to claim 1 is provided.

The data in the additional preamble symbol are scrambled by using an initial state of '111001100110001'.

The length difference between the additional prefix and additional postfix corresponds to 54 samples.

The part and the other part of the additional main part are frequency shifted by negative signed value.

Also, a method of receiving a broadcast signal according to claim 4 is provided.

The obtaining the additional preamble symbol further comprises detecting an additional preamble symbol from the received broadcast signal by using value of the length difference between the prefix and postfix.

Also, a transmitter for processing a broadcasting signal and a receiver for receiving the broadcast signal according to claims 8 and 11 are provided.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a broadcast signal transmitter using a MIMO scheme according to an embodiment of the present invention;
FIG. 2 illustrates a BICM encoder according to an embodiment of the present invention;
FIG. 3 illustrates a broadcast signal receiver according to an embodiment of the present invention;
FIG. 4 illustrates a BICM decoder according to an embodiment of the present invention;
FIG. 5 illustrates a PLP based additional frame structure according to an embodiment of the present invention;
FIG. 6 illustrates an FEF based additional frame structure according to an embodiment of the present invention;
FIG. 7 illustrates an embodiment of an OFDM generator of a broadcast signal transmission device for inserting AP1 symbols according to the present invention;
FIG. 8 illustrates another embodiment of an OFDM demodulator according to the present invention;
FIG. 9 illustrates a P1 symbol structure and a P1 symbol inserter according to an embodiment of the present invention;
FIG. 10 illustrates correlation between a P1 symbol and an AP1 symbol when the P1 symbol and the AP1 symbol are continuously transmitted according to an embodiment of the present invention;
FIG. 11 illustrates a Peak-to-Average Power Ratio (PAPR) according to the PRBSs of P1 and AP1 symbols according to an embodiment of the present invention;
FIG. 12 illustrates a power spectrum density in the case in which a specific scrambling sequence is used according to an embodiment of the present invention;
FIG. 13 illustrates interference between P1 and AP1 symbols according to an offset of a prefix and a postfix of an AP1 symbol;
FIG. 14 illustrates an AP1 structure and AP1 symbol generator according to an embodiment of the present invention;
FIG. 15 illustrates an AP1 detection and decoding module according to an embodiment of the present invention;
FIG. 16 illustrates an AP1 symbol detector according to an embodiment of the present invention;
FIG. 17 is a flowchart illustrating a procedure for performing a transmission process on a broadcast signal according to an embodiment of the present invention; and
FIG. 18 illustrates a procedure for receiving a broadcast signal according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Although most terms of elements in this specification have been selected from general ones widely used in the art taking into consideration functions thereof in the invention, the terms may be changed depending on the intention or convention of those skilled in the art or the introduction of new technology. Some terms have been arbitrarily selected by the applicant and their meanings are explained in the following description as needed. Thus, the definitions of the terms used in this specification should be determined based on the overall content of this specification together with the intended meanings of the terms rather than their simple names or meanings.

Various technologies have been introduced to increase transmission efficiency and to perform robust communication in a digital broadcast system. One of such technologies is a method of using a plurality of antennas at a transmitting side or a receiving side. This method may be classified into a Single-Input Single-Output (SISO) scheme in which transmission is performed through a single antenna and reception is performed through a single antenna, a Single-Input Multiple-Output (SIMO) scheme in which transmission is performed through a single antenna and reception is performed through multiple antennas, a Multiple-Input Single-Output (MISO) scheme in which transmission is performed through multiple antennas and reception is performed through a single antenna, and a Multiple-Input Multiple-Output (MIMO) scheme in which transmission is performed through multiple antennas and reception is performed through multiple antennas. Although the multiple antennas may be exemplified by 2 antennas for ease of explanation in the following description, the description of the present invention may also be applied to systems that use 2 or more antennas.

The SISO scheme corresponds to a general broadcast system that uses 1 transmit antenna and 1 receive antenna. The SIMO scheme corresponds to a broadcast system that uses 1 transmit antenna and a plurality of receive antennas.

The MIMO scheme corresponds to a broadcast system that uses a plurality of transmit antennas and 1 receive antenna to provide transmit diversity. An example of the MISO scheme is an Alamouti scheme. In the MISO scheme, it is possible to receive data through 1 antenna without performance loss. Although a reception system can receive the same data through a plurality of receive antennas in order to improve performance, this case will be described as belonging to MISO cases in this specification.

The MIMO scheme corresponds to a broadcast system that uses a plurality of transmit antennas and a plurality of receive antennas to provide transmission/reception diversity and high transmission efficiency. In the MIMO scheme, signals are processed (or handled) differently in time and space dimensions and a plurality of data streams is transmitted through parallel paths that simultaneously operate in the same frequency band to achieve diversity effects and high transmission efficiency.

The performance of a system that employs the MIMO technology depends on characteristics of a transmission channel. The efficiency of such a system is high, especially, when the system has independent channel environments. That is, the performance of the system that employs the MIMO technology may improve when channels of all antennas ranging from antennas of the transmitting side and antennas of the receiving side are independent channels that have no correlation to each other. However, in a channel environment in which the correlations between channels of transmission and receive antennas are very high as in a line-of-sight (LOS) environment, the performance of the system that employs the MIMO technology may be significantly reduced or the system may not be able to operate.

In addition, if the MIMO scheme is applied to a broadcast system that uses the SISO and MISO schemes, it is possible to increase data transmission efficiency. However, in addition to the above problems, there is a need to maintain compatibility to allow a receiver having a single antenna to receive services. Accordingly, the present invention suggests a method for solving such existing problems.

In addition, the present invention can provide a broadcast signal transmitter/receiver and a broadcast transmission and reception method for a conventional terrestrial broadcast system and a system that can transmit and receive additional broadcast signals (or enhanced broadcast signals), for example, mobile broadcast signals, while sharing an RF frequency band with a terrestrial broadcast system such as DVB-T2.

To accomplish this, in the present invention, it is possible to use a video coding method having scalability in which a basic video component which has low image quality although it is robust to a communication environment and an extended video component which is slightly weak to a communication environment although it can provide a high-quality image can be distinguishably transmitted. Although the present invention will be described with reference to SVC as a video coding method having scalability, the present invention may be applied to any other video coding methods. Embodiment of the present invention will be described in more detail with reference to the drawings.

A broadcast signal transmitter and receiver of the present invention can perform MISO processing and MIMO processing on a plurality of signals that are transmitted and received through a plurality of antennas. The following is a description of a broadcast signal transmitter and receiver that performs signal processing on 2 signals that are transmitted and received through 2 antennas.

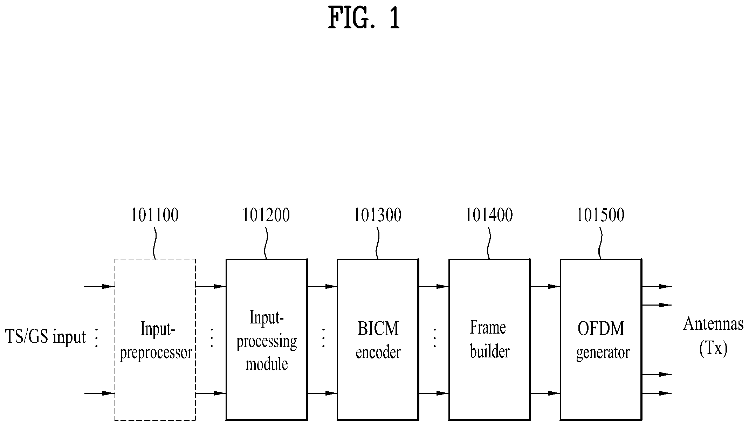

FIG. 1 illustrates a broadcast signal transmitter using the MIMO scheme according to an embodiment of the present invention.

As shown in FIG. 1, the broadcast signal transmitter according to the present invention may include an input processor 101100, an input processing module 101200, a Bit Interleaved Coded Modulation (BICM) encoder 101300, a frame builder 101400, and an Orthogonal Frequency-Division Multiplexing (OFDM) generator (or transmitter) 101500. The broadcast signal transmitter according to the present invention may receive a plurality of MPEG-TS streams or a General Stream Encapsulation (GSE) stream (or GS stream).

The input processor 101100 may generate a plurality of PLPs (physical layer pipes) on a service basis in order to give robustness to a plurality of input streams, i.e., a plurality of MPEG-TS streams or GSE streams.

PLPs are data units that are identified in the physical layer. Specifically, a PLP is data having the same physical layer attribute which is processed in the transmission path and may be mapped on a cell by cell basis in a frame. In addition, a PLP may be considered a physical layer Time Division Multiplexing (TDM) channel that carries one or a plurality of services. Specifically, a path through which such a service is transmitted is transmitted or a stream identifiable in the physical layer which is transmitted through the path is referred to as a PLP.

Thereafter, the input processing module 101200 may generate a Base Band (BB) frame including a plurality of generated PLPs. The BICM module 101300 may add redundancy to the BB frame to correct an error in a transmission channel and may interleave PLP data included in the BB frame.

The BICM encoder 101300 may perform encoding for error correction. The BICM encoder 101300 of the present invention may independently apply the MISO scheme or the MIMO scheme to each PLP data item and may also independently apply the MISO scheme or the MIMO scheme to L1-signaling information. The L1-signaling information according to the present invention may include L1-post signaling information and L1-post signaling information. A procedure in which the BICM encoder 101300 independently performs MISO and MIMO processing on PLP data will be described later.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a first antenna Tx_2.

Accordingly, the frame builder 101400 of the present invention may include a first frame building block for processing data input through the first path and a second frame building block for processing data input through the second path. The first frame building block may include a first delay compensator, a first pair-wise cell mapper, and a first pair-wise frequency interleaver for processing data input through the first path and the second frame building block may include a second delay compensator, a second pair-wise cell mapper, and a second pair-wise frequency interleaver for processing data input through the second path.

The first pair-wise cell mapper and the first pair-wise frequency interleaver and the second pair-wise cell mapper and the second pair-wise frequency interleaver may operate in the same manner for the first path and the second path and may also operate independently.

The following is a description of a data processing method for blocks included in the first frame building block and the second frame building block.

The first delay compensator and the second delay compensator may compensate L1-pre signaling data or L1-post signaling data input through each path for both delay corresponding to 1 frame and delay caused by BICM encoding. The L1-signaling information may include not only information regarding a current frame but also information regarding a subsequent frame. The reason for this is that, in the input processing procedure, the L1-signaling information is delayed compared to currently input PLP data by one frame. This procedure allows one frame to transmit all L1-signaling information including information regarding the current frame and the subsequent frame.

The first pair-wise cell mapper and the second pair-wise cell mapper may map L1-signaling data and PLP data in symbols input through the paths to a subcarrier in an OFDM symbol in a frame on a cell by cell basis.

In this case, the PLP data input through each path may include common PLP data and MISO/MIMO-encoded PLP data and the sub-slice processor module may perform sub-slicing on PLP data cells to map the same to a frame in order to achieve diversity effects.

In addition, the first pair-wise cell mapper and the second pair-wise cell mapper may pair 2 consecutive input cells and map the same to a frame.

In order to increase MISO signal reconstruction performance of the receiver, there is a need to secure coherence between MISO transmission channels when MISO encoding is performed. Accordingly, in order to secure coherence between channels, the first pair-wise cell mapper and the second pair-wise cell mapper may pair cells generated from the same PLP data and map the same to an OFDM modulation subcarrier to maximize coherence between channels. Specifically, in the embodiment of the present invention, since the MISO encoder is located at the BICM encoder prior to the frame builder, the frame builder configures a frame structure on a pair basis taking into consideration such MISO encoding.

The first pair-wise frequency interleaver and the second pair-wise frequency interleaver may perform frequency interleaving on data input through each path on a cell basis and may then output frequency-interleaved data to the OFDM generator through each path.

In this case, the first pair-wise frequency interleaver and the second pair-wise interleaver pair 2 consecutive input cells and process the same as one interleaving unit to perform frequency interleaving. The purpose of this is to maximize coherence between channels.

The OFDM generator 101500 may OFDM-modulate input data mapped within a frame on a symbol basis and output the modulated data to an antenna. In an embodiment of the present invention, broadcast signals are transmitted through 2 transmission antennas in a MISO or MIMO manner. Thus, the OFDM generator 101500 may receive and modulate broadcast signals through the first path and the second path and output the modulated broadcast signals to two antennas Tx1 and Tx2.

In the present invention, a block that modulates a broadcast signal to be transmitted through the first antenna Tx1 may be referred to as a first OFDM generating block and a block that modulates a broadcast signal to be transmitted through the second antenna Tx2 may be referred to as a second OFDM generating block.

When the channel correlation between channels transmitted through the first antenna and the second antenna is high, the first and second antennas may transmit a signal by applying polarity to the signal according to whether the correlation is negative or positive. In the present invention, a MIMO scheme using this method may be referred to as a polarity multiplexing MIMO scheme, the first antenna that adds polarity to a received signal to transmit the signal may be referred to as a vertical antenna, and the second antenna that adds polarity to a received signal to transmit the signal may be referred to as a horizontal antenna. Accordingly, the first OFDM generating block of the present invention may OFDM-modulate a broadcast signal input through the first path and transmit the modulated broadcast signal through the first antenna Tx1 and the second OFDM generating block of the present invention may OFDM-modulate a broadcast signal input through the second path and transmit the modulated broadcast signal through the second antenna Tx2.

Each of the first OFDM generating block and the second OFDM generating block includes the following modules.

The first OFDM generating block may include a pilot insertion module, an IFFT module, a PAPR module, a GI insertion module, a P1 symbol insertion module, an AP1 symbol insertion module, and a DAC.

The second OFDM generating block may include a pilot insertion module, an IFFT module, a PAPR module, a GI insertion module, a P1 symbol insertion module, an AP1 symbol insertion module, and a DAC. The modules of the second OFDM generating block perform the same functions as those of the first OFDM generating block.

Thus, operations of the modules included in the first OFDM generating block are described below in detail. The pilot insertion module inserts a pilot having a predetermined pilot pattern into a frame at a corresponding position and outputs the frame to the IFFT module.

The IFFT module may perform an IFFT operation on the pilot-inserted signal of each path and output the resulting signal to the PAPR module.

The PAPR module reduces PAPR of time-domain signals and outputs the resulting signals to the GI insertion module. Here, the PAPR module may feed required information back to the pilot insertion module according to a PAPR reduction algorithm.

The GI insertion module copies a last portion of an effective OFDM symbol and inserts a guard interval into each OFDM symbol in a cyclic prefix (CP) format and outputs the resulting symbol to the P1 symbol insertion module. The GI information may be transmitted through P1 signaling information or L1-pre signaling information.

In an embodiment of the present invention, a P1 symbol and an AP1 symbol may be inserted into every frame at the P1 insertion module in the OFDM generator 101500. That is, the P1 insertion module may insert 2 or more preamble symbols into every frame. When 2 or more preamble symbols are used as in the present invention, there are advantages in that robustness to burst fading that may occur in a mobile fading environment is further increased and signal detection performance is also improved.

The P1 symbol insertion module may insert a P1 symbol into each frame at a start portion thereof and output the resulting frame to the AP1 symbol insertion module.

The AP1 symbol insertion module may insert an AP1 symbol (additional preamble symbol) into the P1 symbol at a rear portion thereof and output the resulting frame to the DAC.

The DAC may convert each signal frame, into which the AP1 symbol is inserted, into an analog signal and transmit the analog signal through the first transmission antenna Tx1.

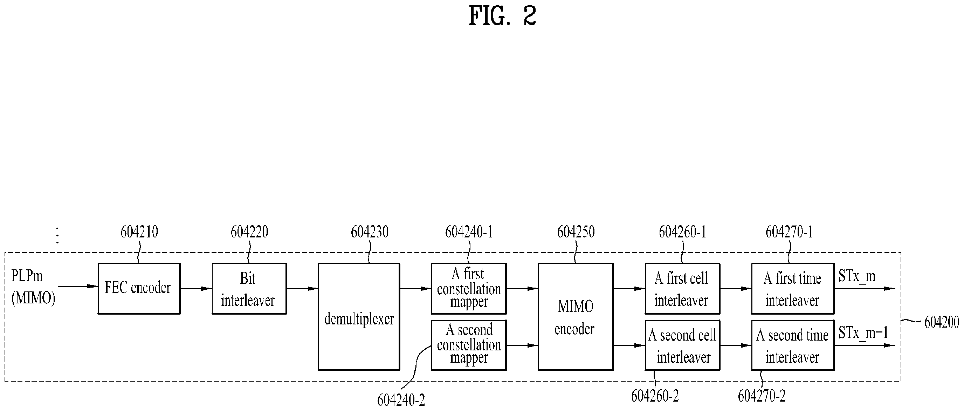

FIG. 2 illustrates a BICM encoder according to an embodiment of the present invention.

The BICM encoder 101300 of the present invention may include a first BICM encoding block for MISO PLP processing, a second BICM encoding block for MIMO PLP processing, and a third BICM encoding block for performing MISO or MIMO encoding on L1-pre signaling information and L1-post signaling information.

The first BICM encoding block may include a Forward Error Correction (FEC) encoder, a bit interleaver, a demultiplexer, a constellation mapper, a cell interleaver, a time interleaver, and a MISO encoder. The MISO encoder may be located next to the time interleaver and the location of the MISO encoder may be changed according to designer intention. The MISO encoder may perform MISO encoding on the time-interleaved PLP data using a MISO encoding matrix and output MISO-encoded PLP data through 2 paths. In this manner, it is possible to achieve diversity. Embodiments of the MISO encoding method according to the present invention include Orthogonal Space-Time Block Code (OSTBC)/Orthogonal Space Frequency Block Code (OSFBC)/Alamouti code methods.

The second BICM encoding block may include a Forward Error Correction (FEC) encoder, a bit interleaver, a demultiplexer, first and second constellation mappers, a MIMO encoder, first and second cell interleavers, and first and second time interleavers. The numbers of the constellation mappers, the cell interleavers, and the time interleavers may be changed according to designer intention.

The third BICM encoding block may output encoded signals of the L1-pre signaling information and the L1-post signaling information through two paths, respectively.

The second BICM encoding block for MIMO processing is described below with reference to FIG. 2. The encoding block shown in FIG. 2 is included in the BICM encoder 101300 of FIG. 1 and performs MIMO encoding after constellation mapping in an embodiment of the present invention.

The broadcast signal receiver may include a BICM decoder corresponding to the BICM encoder 101300 of the present invention. The BICM decoder may include a MIMO decoder, a time deinterleaver, and a cell deinterleaver and the MIMO decoder, the time deinterleaver, and the cell deinterleaver may perform processing on received data on a per symbol basis. If the MIMO encoder included in the BICM encoder is located next to the time interleaver, the receiver needs to first perform MIMO decoding on each data item and therefore each data item may be output on a bit basis and time deinterleaving and cell deinterleaving processes may then be performed. In this case, although data is input in units of bits to the time interleaver, information regarding the units of symbols of the input data is additionally needed to perform time interleaving. Accordingly, memory load of the broadcast signal receiver may be increased since the broadcast signal receiver should store information regarding symbol mapping of input bits required for the deinterleaving procedure. Accordingly, in an embodiment of the present invention, the BICM encoding block performs MIMO encoding after constellation mapping. However, this may be changed according to designer intention.

An FEC encoder 604210 may perform LDPC encoding and BCH encoding for adding redundancy so as to allow the receiver to correct an error in a transmission channel for input-processed PLP data. A bit interleaver 604220 may perform bit interleaving on the FEC-encoded PLP data to allow the data to have robustness to a burst error that may occur during transmission. A demultiplexer 604230 may demultiplex the bit-interleaved PLP data. In addition, the demultiplexer 604230 may demultiplex PLP data and output the demultiplexed data through 2 paths required for MIMO transmission. In this case, the transmission characteristics of the data transmitted through each path may differ. Accordingly, the demultiplexer 604230 may randomly allocate bit-interleaved PLP data to each input path.

The first and second constellation mappers 605240-1 and 605240-2 may map the demultiplexed PLP data bits to a constellation on a per symbol basis. In this case, the constellation mapper may rotate the constellation at a predetermined angle according to modulation type. Rotated constellations may be represented by an In (I-phase) component and a Quadrature-phase (Q-phase) component. The constellation mapper may delay only the Q-phase component by an arbitrary value. The constellation mapper may remap the demultiplexed PLP data to a new constellation using the In-phase component and the delayed Q-phase component.

A MIMO encoder 604250 may perform MIMO encoding on the input PLP data of the 2 paths using a MIMO encoding matrix and output the MIMO-encoded PLP data through the 2 paths. The MIMO encoding matrix of the present invention may include spatial multiplexing, Golden Code (GC), full-rate full diversity code, and linear dispersion code. Details of the encoding matrix required for the MIMO encoding procedure will be described later. The MIMO encoder 604250 may be located next to the first and second time interleavers 605270-1 and 605270-2. That is, the MIMO encoder 604250 may perform MIMO encoding on data that has been time-interleaved by the first and second time interleavers 605270-1 and 605270-2.

First and second cell interleavers 604260-1 and 604260-2 may perform interleaving on PLP data output through the 2 paths on a cell basis, respectively, and may perform cell interleaving only on PLP data corresponding to one half the size of a cell included in one FEC block from among PLP data input through each path. Accordingly, cell interleaving by the two cell interleavers may have the same effects as interleaving by one cell interleaver. In addition, there is an advantage in that cell interleaving can be performed using memory setting of one cell interleaving without allocating an additional memory to two cell interleavers in order to process data of a plurality of paths.

First and second time interleavers 604270-1 and 604270-2 may perform interleaving on the cell-interleaved PLP data output through the paths on a time basis. Here, the time interleavers may perform interleaving using FEC blocks. In this case, the time interleavers may perform time interleaving on PLP data input through the paths using the same method and may also perform time interleaving on the PLP data using different methods.

The frame builder 101400 may receive data encoded by the BICM encoder 101300 and map the same to a frame. As described above, the first BICM encoding block may output miso-encoded PLP data through two paths and the second BICM encoding block may output MIMO-encoded PLP data through two paths. In addition, the third BICM encoding block may output encoded signals of the L1-pre signaling information and the L1-post signaling information through two paths, respectively.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a second antenna Tx_2.

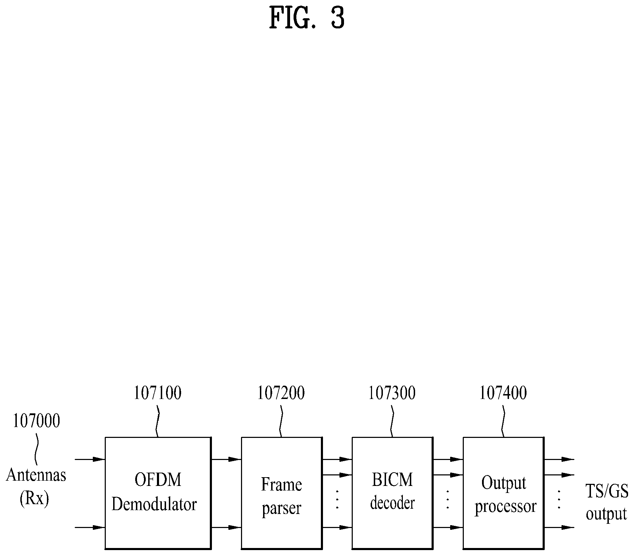

FIG. 3 illustrates a broadcast signal receiver according to an embodiment of the present invention.

As shown in FIG. 3, the broadcast signal receiver may perform a reverse procedure to that of the broadcast signal transmitter described above with reference to FIG. 1. The broadcast signal receiver according to an embodiment of the present invention may include an OFDM demodulator 107100, a frame parser (or frame demapper) 107200, a BICM decoder 107300, and an output processor 107400.

The OFDM demodulator (or OFDM receiver) 107100 may convert signals received through a plurality of reception antennas into frequency-domain signals. In an embodiment of the present invention, two reception antennas Rx1 and Rx2 may be used to receive MIMO or MISO-transmitted signals. In addition, polarity multiplexing MIMO may be used in an embodiment of the present invention. Accordingly, the OFDM demodulator 107100 may OFDM-demodulate a broadcast signal input through the first antenna Rx1 and output the demodulated signal to the frame demapper through the first path and a second OFDM demodulating block may OFDM-demodulate a broadcast signal input through the second antenna Rx2 and output the demodulated signal to a frame demapper 107200.

The frame demapper 107200 may process data input through the first path and the second path and output PLPs for a required service. The frame demapper 107200 of the present invention may perform a reverse procedure to that of the frame builder 101400 described above with reference to FIG. 1. Accordingly, the frame demapper 107200 of the present invention may pair and extract 2 consecutive cells and output the same to a BICM decoder 107300.

The BICM decoder 107300 may correct an error caused by a transmission channel and may perform a reverse procedure to that of the BICM encoder 101300 described above with reference to FIG. 1. Accordingly, the BICM decoder 107300 of the present invention may independently apply a MISO scheme to each input data item and may also apply a MIMO scheme.

As a result, the BICM decoder 107300 may output BICM-decoded MISO PLP data, BICM-decoded MIMO PLP data, and BICM-decoded L1-pre and L1-post signaling data to an output processor 107400.

The output processor 107400 may perform processes required to generate an output TS or a GS stream. Here, the broadcast signal receiver may receive a dual polarity signal as an input antenna signal and output one or a plurality of TSs or GS streams.

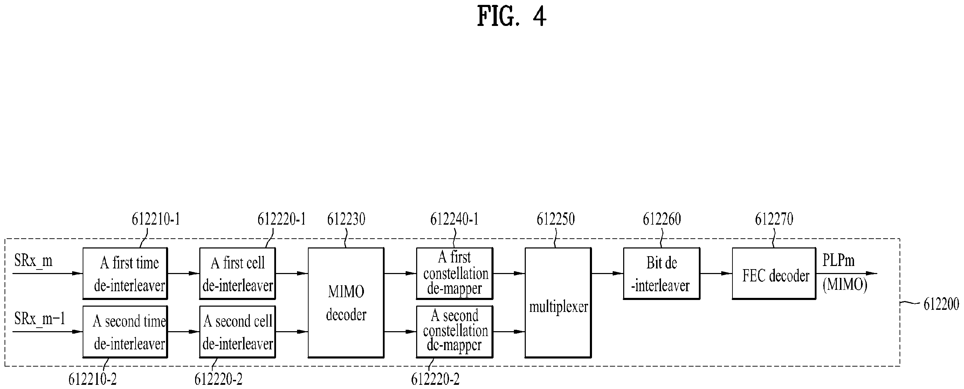

FIG. 4 illustrates a BICM decoder according to an embodiment of the present invention.

Specifically, FIG. 4 illustrates a BICM decoding block included in the BICM decoder and the BICM decoding block may perform MIMO processing on input data. The BICM decoding block of FIG. 4 may perform a reverse procedure to that of the BICM decoding block of FIG. 2.

The BICM decoding block shown in FIG. 4 may include first and second time deinterleavers 612210-1 and 612210-2, first and second cell deinterleavers 612220-1 and 612220-2, a MIMO decoder 612230, first and second constellation demappers 612240-1 and 612240-2, a multiplexer 612250, a bit deinterleaver 612260, and an FEC decoder 612270.

The first and second time deinterleavers 612210-1 and 612210-2 may perform time-domain deinterleaving on input data on a cell basis to reconstruct (or restore) original data in the original order. In this case, the first and second cell deinterleavers 612220-1 and 612220-2 may perform cell deinterleaving only on data corresponding to one half the size of a cell included in one FEC block from among data input through each path. As a result, cell deinterleaving by the first and second deinterleavers 612220-1 and 612220-2 can have the same effects as cell deinterleaving by a deinterleaver using one FEC block.

The MIMO decoder 612230 may perform MIMO decoding on cell-interleaved data input through two paths SRx_m and SRx_m+1. The MIMO decoder 612230 may perform operations, other than the fourth operation (i.e., a signal combination operation), from among the 4 operations of the MISO decoder 612110 described above in the same manner as the MISO decoder 612110. Here, the MIMO decoder 612210 may also perform decoding using the MIMO encoding matrix described above. The MIMO decoder 612230 may be located before the first and second time deinterleavers 622210-1 and 622210-2. That is, data may be deinterleaved after the data is MIMO-decoded by the MIMO decoder 612230. When the MIMO encoder is located next to the time interleavers at the transmitting side, the MIMO decoder 612230 may be located before the first and second time deinterleavers 622210-1 and 622210-2.

Each of the first and second constellation demappers 612240-1 and 612240-2 may calculate an LLP value. Specifically, in the case in which the first and second constellation mappers 604240-1 and 604240-2 described above with reference to FIG. 2 have performed constellation rotation and Q-phase component delay, each of the first and second constellation demappers 612240-1 and 612240-2 may calculate an LLR value after delaying the I-phase component. The multiplexer 612250 may reconstruct the demapped data into a bitstream format.

The bit deinterleaver 612260 may perform deinterleaving on the input bitstream and the FEC decoder 612270 may perform FEC decoding on the deinterleaved data to correct an error in the transmission channel and may then output MIMO PLP data.

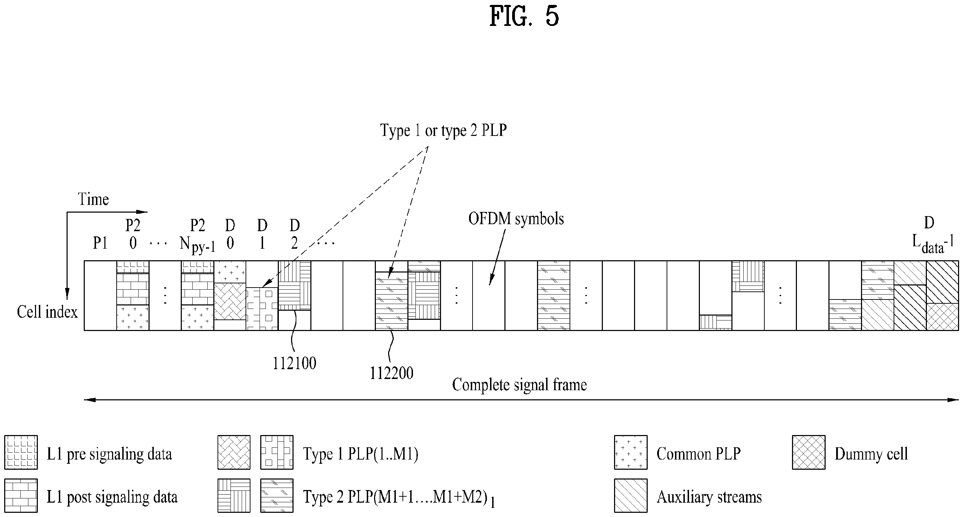

FIG. 5 illustrates an additional frame structure based on PLP according to an embodiment of the present invention.

As shown in FIG. 5, a frame according to an embodiment of the present invention may include a preamble area and a data area. The preamble area may include a P1 symbol and a P2 symbol and the data area may include a plurality of data symbols. The P1 symbol may transmit P1 signaling information and the P2 symbol may transmit L1-signaling information.

In this case, a preamble symbol may be additionally allocated to the preamble. This additional preamble symbol is referred to as an Additional Preamble 1 (AP1). In an embodiment of the present invention, one or more AP1 symbols may be added to a frame in order to improve detection performance of a mobile broadcast signal under very low SNR or time-selective fading conditions. AP1 signaling information transmitted through the AP1 symbol may include an additional transmission parameter.

The preamble area of the frame according to the present invention may include a P1 symbol, one or more AP1 symbols, one or more P2 symbols. The data area includes a plurality of data symbols (or data OFDM symbols). In an embodiment, the P2 symbol may be selective and whether or not the P2 symbol is inserted may be signaled through AP1 signaling information that is transmitted through an AP1 symbol.

In an embodiment of the present invention, a P1 insertion module in the OFDM generator OFDM generator 101500 of the broadcast signal transmitter may insert the P1 symbol and the AP1 symbol into every symbol. That is, the P1 insertion module may insert 2 or more preamble symbols into every frame. In another embodiment, an AP1 insertion module may be added downstream of (or next to) the P1 insertion module and the AP1 insertion module may insert the AP1 symbol. If 2 or more preamble symbols are used as in the present invention, there are advantages in that robustness to burst fading that may occur in a mobile fading environment is further increased and signal detection performance is also improved.

The P1 symbol may transmit P1 signaling information associated with a basic transmission parameter and transmission type and a corresponding preamble identifier and the receiver may detect the frame using the P1 symbol. A plurality of P2 symbols may be provided and may carry L1 signaling information and signaling information such as a command PLP. The L1 signaling information may include L1-pre signaling information and L1-post signaling information and the L1-pre signaling information may include information required to receive and decode the L1-post signaling information. The L1-post signaling information may include parameters required for the receiver to decode PLP data. As shown in FIG. 5, the L1-post signaling information may be located next to L1-pre signaling information.

The L1-post signaling information may include a configurable block, a dynamic block, an extension block, a Cyclic Redundancy Check (CRC) block, and an L1 padding block.

The configurable block may include information items that may be equally applied to one frame and the dynamic block may include specific information items corresponding to a currently transmitted frame.

The extension block may be a block that can be used when the L1-post signaling information is extended and the CRC block may include information items used for error correction of the L1-post signaling information and may have a size of 32 bits. When the L1-post signaling information is separately transmitted through a number of encoding blocks, the padding block may be used to match the size of information included in each encoding block and the size thereof may be variable.

The common PLP may include network information such as a Network Information Table (NIT), PLP information, and service information such as a Service Description Table (SDT) or an Event Information Table (EIT). The preamble of the present invention may include only the P1 symbol, the L1-pre signaling information, and the L1-post signaling information or may include all of the P1 symbol, the L1-pre signaling information, the L1-post signaling information, and the common PLP according to designer intention. A plurality of data symbols located next to the P1 symbol may include a plurality of PLPs. The plurality of PLPs may include audio, video, and data TS streams and PSI/SI information such as a Program Association Table (PAT) and a Program Map Table (PMT). In the present invention, a PLP that transmits PSI/SI information may be referred to as a base PLP or a signaling PLP. The PLPs may include a type-1 PLP that is transmitted through one sub-slice per frame and a type-2 PLP that is transmitted through two sub-slices per frame. The plurality of PLPs may transmit one service and may also transmit service components included in one service. When the PLPs transmit service components, the transmitting side may transmit signaling information which indicates that the PLPs transmit service components.

In addition, additional data (or an enhanced broadcast signal) in addition to basic data may be transmitted through a specific PLP while sharing an RF frequency band with the conventional terrestrial broadcast system according to an embodiment of the present invention. In this case, the transmitting side may define a system or a signal that is currently transmitted through signaling information of the P1 symbol described above. The following description is given with reference to the case in which the additional data is video data. That is, as shown in FIG. 5, PLP M1 112100 and PLP (M1+M2) 112200 which are type 2 PLPs may be transmitted while including additional video data. In addition, in the present invention, a frame that transmits such additional video data may be referred to as an additional frame and a frame that transmits basic data may be referred to as a basic frame (or T2 frame).

In addition, a frame that can transmit not only additional data but also data associated with a new broadcast system different from the conventional terrestrial broadcast system may be referred to as an additional frame. In this case, a frame that transmits a conventional terrestrial broadcast may be referred to as a terrestrial broadcast frame and an additional frame may transmit additional data or basic data associated with the new broadcast system.

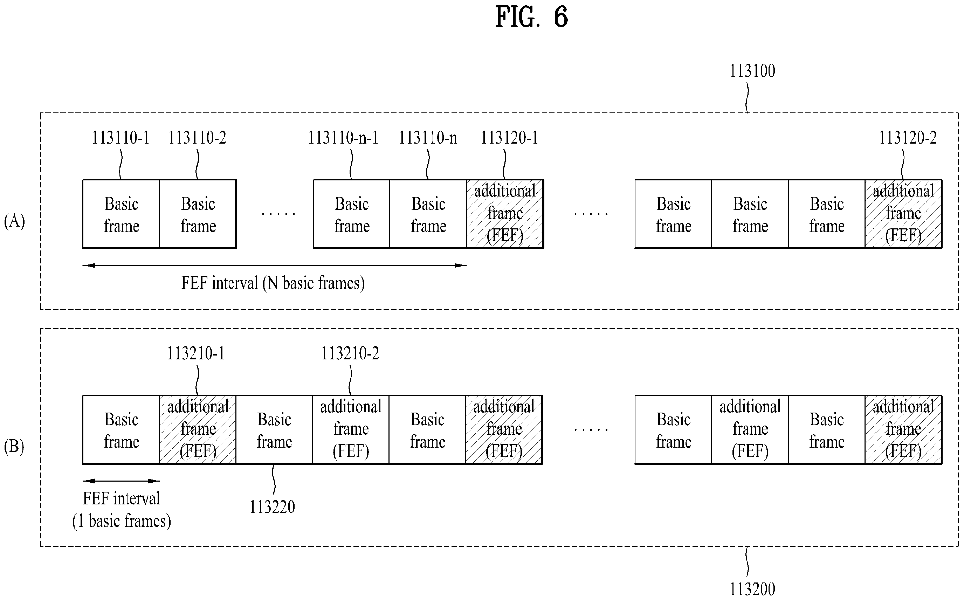

FIG. 6 illustrates a structure of an FEF based additional frame according to an embodiment of the present invention.

Specifically, FIG. 6 shows the case in which a Future Extension Frame (FEF) is used in order to transmit additional video data. In the present invention, a frame that transmits basic video data may be referred to as a basic frame and an FEF that transmits additional video data may be referred to as an additional frame.

FIG. 6 shows structures of superframes 11100 and 113200 in each of which a basic frame and an additional frame are multiplexed. Frames 113100-1 to 113100-n that are not shaded from among frames included in the superframe 113100 are basic frames and shaded frames 113120-1 and 113120-2 are additional frames.

In this case, the time required for the receiver to receive a next additional frame 113120-2 after receiving one additional frame 113120-1 may correspond to N basic frames.

FIG. 6(B) shows the case in which the ratio of basic frames to additional frames is 1:1. In this case, the proportion of additional frames in the superframe 113200 may be maximized and therefore the additional frames may have a structure very similar to that of the basic frames in order to maximize the extent of sharing with the basic frames. In addition, in this case, the time required for the receiver to receive a next additional frame 113210-2 after receiving one additional frame 113210-1 corresponds to 1 basic frame 113220 and therefore the superframe period is shorter than that of FIG. 6(A).

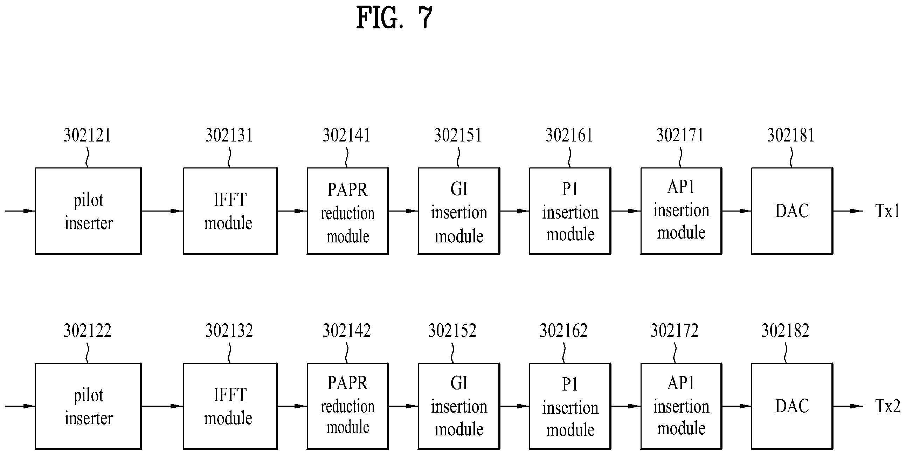

FIG. 7 illustrates an embodiment of an OFDM generator of a broadcast signal transmission device for inserting AP1 symbols according to the present invention. Specifically, FIG. 7 illustrates an embodiment of the OFDM generator when a broadcast signal is transmitted according to a MISO or MIMO scheme, especially, through 2 transmit antennas.

To accomplish this, the OFDM generator includes 2 pilot inserters 302121 and 302122, 2 IFFT modules 302131 and 302132, 2 PAPR reduction modules 302141 and 302142, 2 GI insertion modules 302151 and 302152, 2 P1 symbol insertion modules 302161 and 302162, 2 AP1 symbol insertion modules 302171 and 302172, and/or 2 DACs 302181 and 302182. In the present invention, a block that modulates a broadcast signal to be transmitted through the first transmit antenna Tx1 is referred to as a first transmitter and a block that modulates a broadcast signal to be transmitted through the second transmit antenna Tx2 is referred to as a second transmitter. The first transmitter includes a pilot inserter 302121, an IFFT module 302131, a PAPR reduction module 302141, a GI insertion module 302151, a P1 symbol insertion module 302161, an AP1 symbol insertion module 302172, and a DAC 302182.

The pilot inserters 302121 and 302122 insert pilots of determined pilot patterns into signal frames at corresponding positions and output the resulting signal frames to the IFFT modules 302131 and 302132. Here, the pilot pattern information may be signaled through AP signaling information or through L1 signaling information. The pilot pattern information may also be signaled through both AP signaling information and L1 signaling information.

The IFFT modules 302131 and 302132 transform the pilot-inserted signals into time-domain signals through inverse Fourier transform and output the time-domain signals to the PAPR reduction modules 302141 and 302142.

The PAPR reduction modules 302141 and 302142 reduce the PAPRs of the time-domain signals and output the resulting signals to the GI insertion modules 302151 and 302152. The PAPR reduction modules 302141 and 302142 may feed required information back to the pilot inserters 302121 and 302122 according to a PAPR reduction algorithm.

The GI insertion modules 302151 and 302152 copy last portions of effective OFDM symbols to front portions of the OFDM symbols to insert guard intervals in the form of a cyclic prefix into the OFDM symbols and output the resulting symbols to the P1 symbol insertion modules 302161 and 302162. The GI information is signaled through L1 signaling information. Part of the GI information is signaled through P1 signaling information.

The P1 symbol insertion modules 302161 and 302162 insert P1 symbols into the signal frames at start portions thereof and output the resulting signal frames to the AP1 symbol insertion modules 302171 and 302172.

The AP1 symbol insertion modules 302171 and 302172 insert AP1 symbols into the signal frames next to the P1 symbols and then output the resulting signal frames to the DACs 302181 and 302182. Here, the P1 symbols and AP symbols may be inserted by the P1 symbol insertion modules 302161 and 302162. In this case, the AP1 symbol insertion modules 302171 and 302172 are omitted.

The DACs 302181 and 302182 convert the signal frames in which the AP1 symbols are inserted into analog signals and transmit the analog signals through the transmit antennas Tx 1 and Tx2.

When the signal frames are transmitted after pilots are inserted by the pilot inserters 302121 and 302122, the receivers use the pilots for frame synchronization, frequency synchronization, time synchronization, transmission mode identification, and the like.

Pilots according to the present invention may be classified into 2 types. One is a scattered pilot and the other is a continual pilot. The scattered pilot is used when a receiver performs radio channel effects estimation and compensation and the continual pilot is used when a receiver performs accurate frequency synchronization or phase error removal.

In the present invention, there is a plurality of scattered pilot patterns. In an embodiment of the present invention, a signal frame is transmitted after one of the scattered pilot patterns is inserted into OFDM symbols of the signal frame according to FFT and Guide Interval (GI) sizes. More specifically, in an embodiment of the present invention, when a MIMO scheme is used, a signal frame is transmitted after one of 9 scattered pilot patterns PP1 to PP9 is inserted into OFDM symbols of the signal frame according to FFT and Guide Interval (GI) sizes.

In an embodiment of the present invention, an FFT size of 1k, 2k, 4k, 8k, or 16k is used and a GI size of 1/128, 1/32, 1/16, 19/256, 1/8, 19/128, or 1/4 is used. The FFT size indicates the number of subcarriers that constitute one OFDM symbol and the GI size indicates a proportion of the GI in one OFDM symbol. Therefore, the length of an OFDM symbol varies depending on the FFT size and the GI size.

The GI size information is signaled through a GUARD_INTERVAL field of L1 pre-signaling information. Pilot pattern information of a pilot inserted in a current signal frame is signaled through L1 pre-signaling information and/or AP1 signaling information.

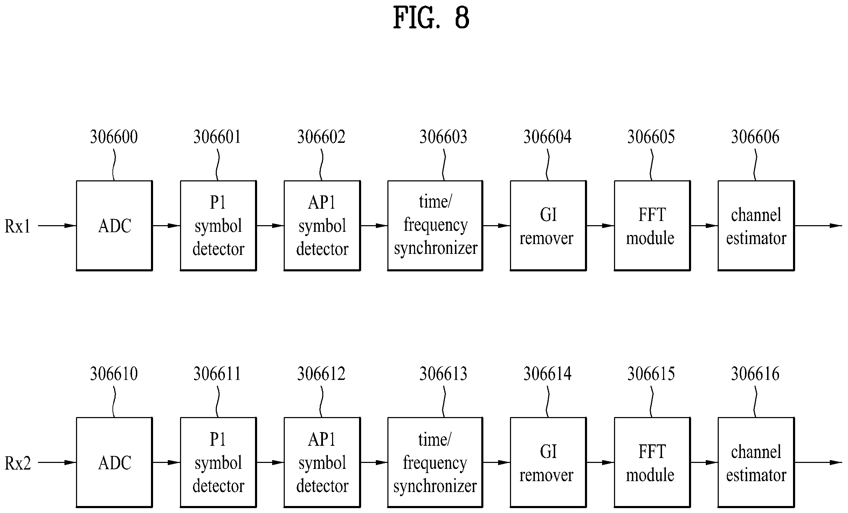

FIG. 8 illustrates another embodiment of an OFDM demodulator according to the present invention. In an embodiment of the present invention, two receive antennas Rx1 and Rx2 are used to receive a signal that is transmitted in a MIMO or MISO manner. The OFDM demodulator of FIG. 8 receives broadcast signals through respective paths of the two antennas Rx 1 and Rx2 and performs OFDM demodulation on the received broadcast signals.

The OFDM demodulator of FIG. 8 includes a first receiver and a second receiver. The first receiver includes an ADC 306600, a P1 symbol detector 306601, an AP1 symbol detector 306602, a time/frequency synchronizer 306603, a GI remover 306604, an FFT module 306605, and a channel estimator 306606. The second receiver includes an ADC 306610, a P1 symbol detector 306611, an AP1 symbol detector 306612, a time/frequency synchronizer 306613, a GI remover 306614, an FFT module 306615, and a channel estimator 306616. The first receiver may further include an equalization/MISO decoder and the second receiver may further include an equalization/MISO decoder.

Since the first receiver and the second receiver according to the present invention have the same configuration, only the first receiver is described below.

The ADC 306600 converts an analog broadcast signal received through the antenna Rx 1 into a digital signal and outputs the digital signal to the P1 symbol detector 306601. The P1 symbol detector 306601 detects and decodes a P1 symbol, which carries P1 signaling information, in the digital broadcast signal to identify a frame configuration of the currently received signal. The AP1 symbol detector 306602 detects and decodes an AP1 symbol, which carries AP1 signaling information, in the digital broadcast signal to acquire pilot pattern information or the like of the current signal frame. Here, P1 and AP1 symbols may be detected and decoded by the P1 symbol detector 306601. In this case, the AP1 symbol detector 306602 is omitted.

The time/frequency synchronizer 306603 performs time synchronization and frequency synchronization including guard interval detection using the P1 signaling information and the AP1 signaling information. After time synchronization and frequency synchronization are achieved, the guard interval remover 306604 removes a guard interval from the signal and the FFT module 306605 transforms the resulting signal into a frequency-domain signal. From pilot signals included in the frequency-domain signal, the channel estimation module 306606 estimates a transport channel from the transmit antenna to the receive antenna.

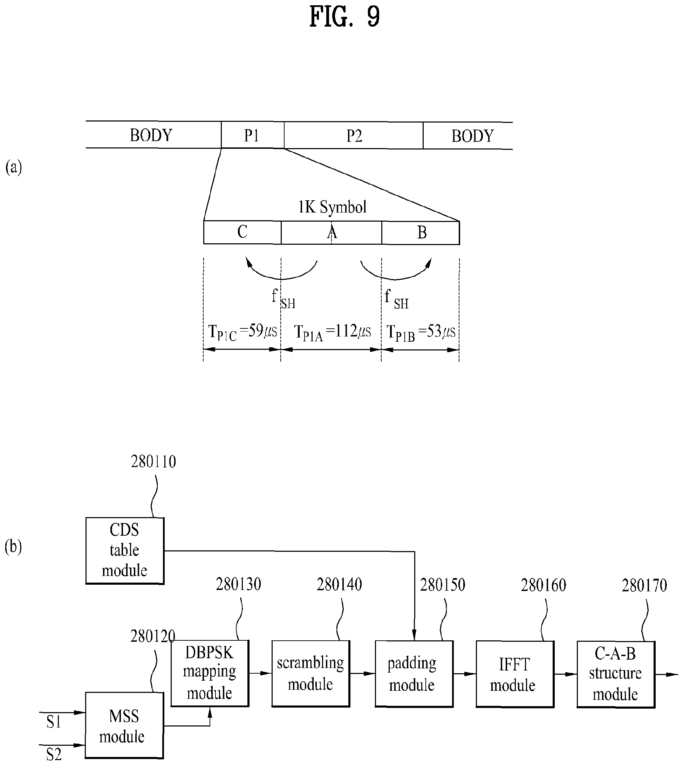

FIG. 9 illustrates a P symbol structure and a P1 symbol inserter according to an embodiment of the present invention.

Specifically, FIG. 9(a) illustrates a P1 symbol structure according to the present invention. In FIG. 9(a), a portion including a P1 symbol and a P2 symbol is referred to as a preamble region and a body portion is referred to as a data region. The data region includes a plurality of data symbols (or data OFDM symbols).

As shown in FIG. 9(a), the P1 symbol is generated by copying a front portion and a rear portion of an effective symbol A and frequency-shifting the copied portions by +fSH and then locating the shifted portions at a front portion C and a rear portion B of the effective symbol A. In the present invention, the portion C is referred to as a prefix and the portion B is referred to as a postfix. That is, the P1 symbol consists of the prefix, the effective symbol, and the postfix. In the present invention, this P1 symbol structure is also referred to as a C-A-B structure. Here, in an embodiment, the P1 symbol is a 1K OFDM symbol.

FIG. 9(b) is a block diagram of a P1 symbol generator or a P1 symbol insertion module that are used in a P1 symbol generation procedure according to the present invention. As shown in FIG. 9(b), the P1 symbol generator or the P1 symbol insertion module includes a Carrier Distribution Sequence (CDS) table module 280110, a Modulation Signaling Sequence (MSS) module 280120, a Differential Binary Phase Shift Keying (DBPSK) mapping module 280130, a scrambling module 280140, an IFFT module 280160, and a C-A-B structure module 280170. Through operations of the blocks of the P1 symbol generator of FIG. 9(b), finally, the C-A-B structure module 280170 outputs a P1 symbol as shown in FIG. 9(a).

In an embodiment of the present invention, the P1 symbol structure of FIG. 9(a) or the P1 symbol generator of FIG. 9(b) is modified to generate a new_system_P1 symbol. Alternatively, both the P1 symbol structure of FIG. 9(a) and the P1 symbol generator of FIG. 9(b) may be modified to generate a new_system_P1 symbol.

When the P1 symbol structure of FIG. 9(a) is modified to generate a new_system_P1 symbol, at least one of the following methods may be used to generate a new_system_P1 symbol. In an example, the frequency shift (or displacement) value fSH for the prefix and the postfix may be modified to generate a new_system_P1 symbol. In another example, the length of the P1 symbol (for example, the length of TP1C or TP1B) may be modified to generate a new-system_P1 symbol. In another example, the 1K length of the P1 symbol may be replaced with 512, 256, or 128 to generate a new-system_P1 symbol. In this case, parameters (for example, fSH, TP1C, or TP1B) used for the P1 symbol structure need to be appropriately corrected. In an embodiment, in a 8MHz system, a P1 symbol having a C-A-B structure has a duration of 224µs. Here, the duration of the A part may be 112µs. The duration of the C part may be 59µs, which corresponds to 542 samples. The B part may be 53µs, which corresponds to 482 samples. Accordingly, the difference between the lengths of the C part and the B part of the P1 symbol corresponds to 60 samples. That is, an offset of the C part and the B part corresponds to 30 samples.

When the P1 symbol generator of FIG. 9(b) may be modified to generate a new-system_P1 symbol, at least one of the following methods may be used to generate a new-system_P1 symbol. In an example, a new-system_P1 symbol may be generated using a method in which a distribution of active carriers used in a P1 symbol in the CDS table module 280110, the MSS module 280120, and the C-A-B structure module 280170 is changed (for example, using a method in which the CDS table module 280110 uses a different Complementary Set of Sequences (CSS)). In another example, a new-system_P1 symbol may be generated using a method in which a pattern of information transmitted through the P1 symbol is modified (for example, using a method in which the MSS module 280120 uses a different CSS).

On the other hand, according to the present invention, a preamble symbol may be additionally allocated to a preamble region in a signal frame. In the present invention, the additional preamble symbol is referred to as an AP1 symbol for ease of explanation. According to the present invention, one or more AP1 symbols are added to a signal frame in order to improve mobile broadcast (NGH) signal detection performance under very low SNR or time-selective conditions.

Here, in an embodiment, the AP1 symbol is located at a P1 symbol and a first P2 symbol in a preamble region of a signal frame. That is, the P1 symbol and the AP1 symbol are continuously transmitted. In an embodiment, if a P2 symbol is not transmitted through a signal frame, the AP1 symbol is located between a P1 symbol and a first data symbol in a preamble region of the signal frame. In another embodiment, a P1 symbol and an AP1 symbol may be transmitted in one signal frame at non-continuous positions to which the P1 symbol and the AP1 symbol are allocated.

A preamble region in a signal frame according to the present invention includes a P1 symbol, one or more AP1 symbols, and one or more P2 symbols. A data region includes a plurality of data symbols (or data OFDM symbols).

In one embodiment, the AP1 symbol is generated by modifying the P1 symbol structure of FIG. 9(a) or by modifying the P1 symbol generator of FIG. 9(b) as described above in the embodiment of new-system_P1 symbol generation. In another embodiment, the AP1 symbol may also be generated by modifying both the P1 symbol structure of FIG. 9(a) and the P1 symbol generator of FIG. 9(b).

In an embodiment of the present invention, a P1 symbol and an AP1 symbol are inserted into every signal frame by the P1 insertion module in the OFDM generator of the transmitter. That is, the P1 insertion module inserts 2 or more preamble symbols into each signal frame. In another embodiment, an AP1 insertion module may be added next to the P1 insertion module and may insert an AP1 symbol. When 2 or more preamble symbols are used as in the present invention, there are advantages in that robustness to burst fading which may occur in a mobile fading environment is increased and signal detection performance is improved.

In an NGH system, an AP1 symbol may be transmitted next to a P1 symbol. The AP1 symbol may serve to supplement the limited capacity of the P1 symbol. That is, when signaling information included in data allocated to the P1 symbol is not sufficient, additional signaling information may be included in the AP1 symbol to be transmitted.

However, when the P1 symbol and the AP1 symbol are transmitted together, discrimination between the P1 symbol and the AP1 symbol and interference therebetween may be problematic.

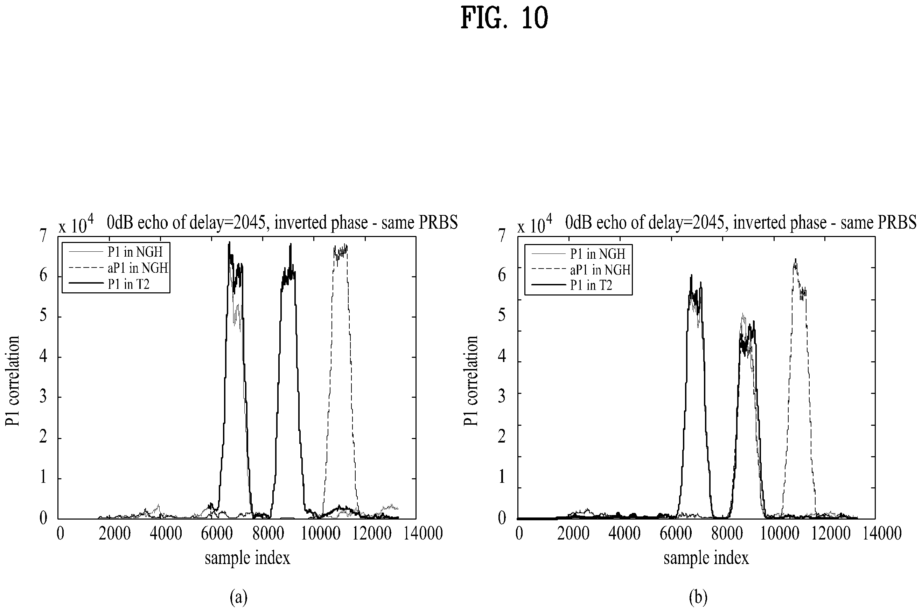

FIG. 10 illustrates correlation between a P1 symbol and an AP1 symbol when the P1 symbol and the AP1 symbol are continuously transmitted according to an embodiment of the present invention.

FIG. 10(A) illustrates an example case in which an AP1 symbol, which is transmitted while being concatenated with a P1 symbol, has delay of the same length as the P1 symbol such that a 0dB echo signal having a phase difference of 180 degrees is present in the AP1 symbol. When a signaling field value transmitted by the P1 symbol and a signaling field value transmitted by the AP1 symbol are equal, the two signals are canceled out such that the P1/AP1 correlation value becomes zero as shown in FIG. 10(A). In this case, a serious situation causing data loss may occur. Thus, there is a need to find a way to prevent such a situation.

FIG. 10(B) illustrates a result of an embodiment of the present invention for preventing the occurrence of a situation in which the P1/AP1 correlation value is zero. If different Pseudo Random Bit Sequences (PRBSs) are used to scramble the signaling fields of the AP1 symbol and the P1 symbol, the correlation value does not become zero such that the two signals are output in any channel environment as shown in FIG. 10(B). That is, the P1 and AP1 signals are not equalized regardless of the signaling fields of the AP1 and P1 symbols. There is a need to take into consideration another problem that may occur when PRBSs used to scramble the signaling fields of the AP1 and P1 symbols are set to be different from each other as in the embodiment of FIG. 10(B). That is, there is a need to find a PRBS optimized for AP symbol transmission although the PRBS is different from that used for the P1 symbol.

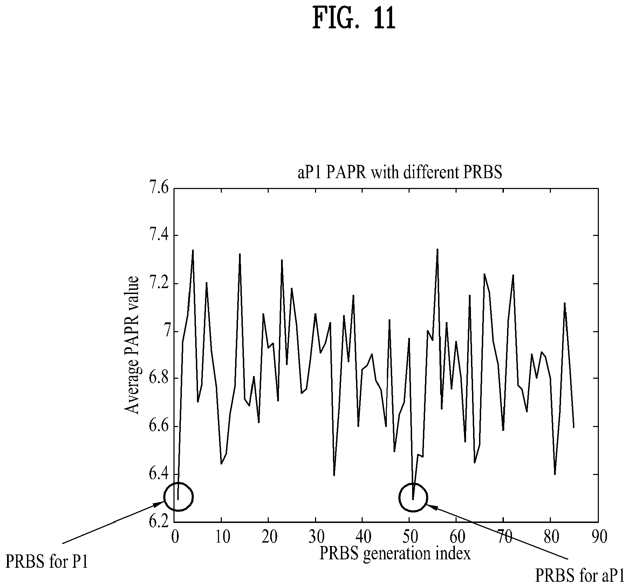

FIG. 11 illustrates a Peak-to-Average Power Ratio (PAPR) according to the PRBSs of P1 and AP1 symbols according to an embodiment of the present invention.

In the OFDM system, an OFDM symbol in the time domain includes a number of subcarriers that have been independently modulated and, when the OFDM symbols are added with the same phase, total maximum power is increased by a multiple of the number of subcarriers. As a result, to transmit a signal having a high PAPR, the HPA of the transmitting side needs a wide linear region around the operating point and therefore there is a problem in that the price is increased. Accordingly, the PRBSs of the P1 and AP1 symbols are determined to have a low PAPR value.

FIG. 11 shows a PAPR value calculated when the same PRBS generator as that used in a T2 system is used while changing an initialization sequence of the PRBS generator. That is, according to the present invention, an NGH system may use the same PRBS generator as used in a conventional T2 system in order to maintain compatibility with the Ts system and therefore there is a need to perform a procedure for searching for an optimal initialization sequence of the PRBS generator in this case. As shown in FIG. 11, an initialization sequence of a PRBS generator having a PAPR value similar to that of the P1 symbol may be selected as shown in FIG. 11.

In an embodiment, the receiver may perform descrambling using a PRBS of a P1 symbol in a procedure for decoding the P1 symbol and may perform descrambling using a PRBS of an AP1 symbol in a procedure for decoding the AP1 symbol.

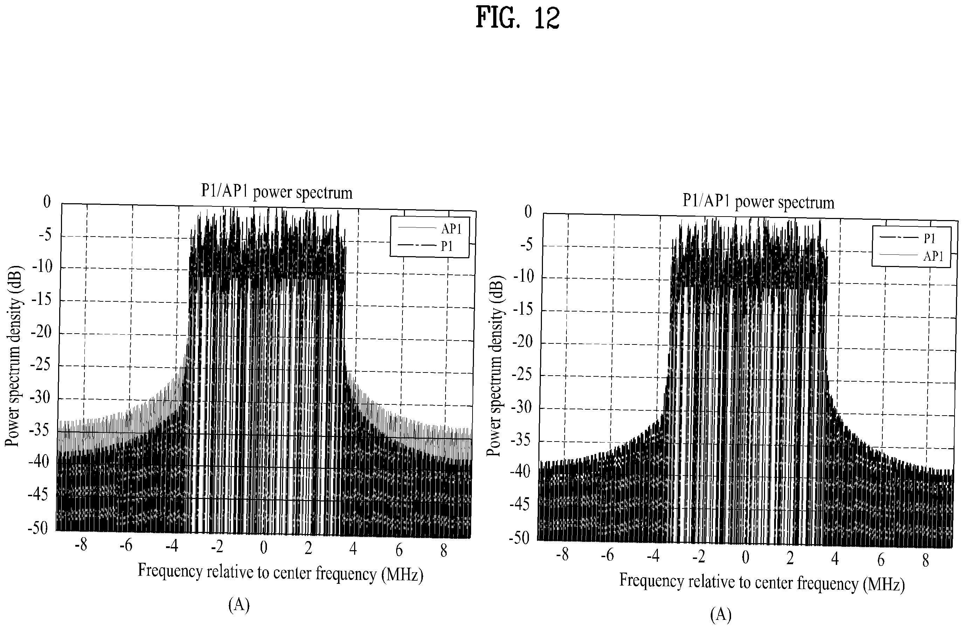

FIG. 12 illustrates a power spectrum density in the case in which a specific scrambling sequence is used according to an embodiment of the present invention.

FIG. 12(A) illustrates the power spectrum density of a central frequency and frequencies around the central frequency when an initialization sequence of a PRBS selected taking into consideration PAPR characteristics in the time domain is used as described above. From FIG. 12(A), it can be seen that the power spectrum density of the P1 symbol and the power spectrum density of the AP1 symbol in the central frequency have similar values.

In this case, according to an embodiment, the value of the initialization sequence of the PRBS selected taking into consideration the PAPR characteristics in the time domain may be {110111001111001}. Here, the experimentally measured result is that the PAPR of the AP1 symbol is 6.2906 and the PAPR of the P1 symbol is 6.2901.

However, it can seen from FIG. 12(A) that, when the initialization sequence of the PRBS selected taking into consideration only the PAPR characteristics in the time domain is used, the power level of the AP1 symbol is higher than the power level of the P1 symbol at frequencies around the central frequency. That is, the power level of the Out Of Band of the AP1 symbol is measured at a higher level than the power level of the OOB of the P1 symbol. In this case, there may be another serious problem. That is, the OOB power level may cause serious interference to signals that are transmitted at adjacent frequencies. If the transmitting side attenuates the frequency components to a lower level than the spectrum mask level to prevent this problem, the characteristics/performance of the signals must be degraded.

Accordingly, there is a need to select an initialization sequence value of the PRBS taking into consideration not only the PAPR value but also the power level of the OOB.

In the present invention, in order to use the same scrambling sequence generator as used for the P1 symbol, an optimal scrambling sequence having best PAPR and OOB characteristics is selected by checking all possible initialization sequences other than that used for the P1 symbol.

An initialization sequence value that satisfies the above condition according to an embodiment of the present invention may be {111001100110001}.

FIG. 12(B) shows the power levels of the AP1 and P1 symbols in the frequency domain measured using an initialization sequence value according to an embodiment of the present invention.

It can be seen from FIG. 12(B) that, if a scrambling sequence is generated using the suggested initialization sequence, the PAPR value of the AP1 symbol is reduced below that of the P1 symbol and the OOB power level of the AP1 symbol is also reduced below that of the P1 symbol.

Thus, the scrambling sequence for the AP1 symbol suggested in the present invention exhibits better characteristics and performance than that of the conventionalP1 symbol in terms of the PAPR and the OOB power level.

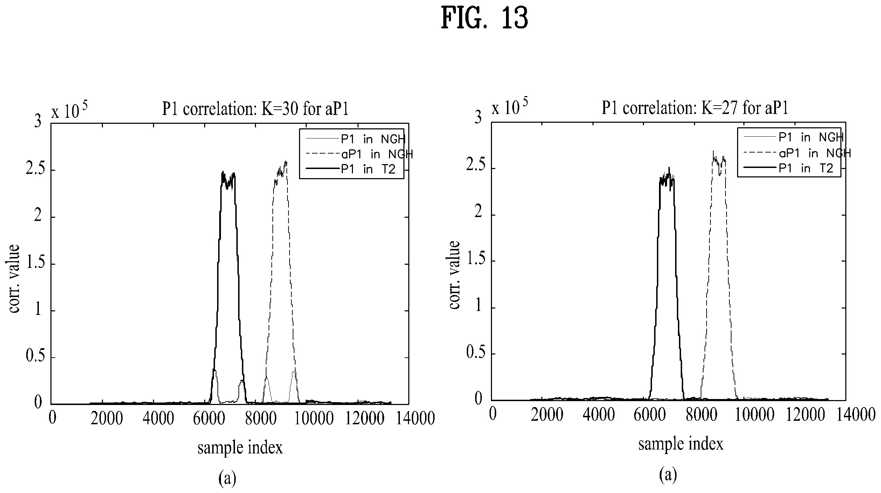

FIG. 13 illustrates interference between P1 and AP1 symbols according to an offset of a prefix and a postfix of an AP1 symbol.

Even when an AP1 symbol is transmitted, the AP1 symbol may be processed such that it has a prefix and a postfix, similar to the P1 symbol. This will be described later in detail.

Since the P1 symbol and the AP1 symbol are continuously transmitted, interference may occur between the P1 symbol and the AP1 symbol and such interference may exert a significant influence upon a legacy receiver of the T2 system. A broadcast signal in the NGH system should be designed while maintaining compatibility with the T2 system. Although the legacy receiver of the T2 system needs to identify and parse P1 symbols since the legacy receiver of the T2 system does not use AP1 symbols, interference between P1 and AP1 symbols may be a hindrance to such P1 symbol identification and parsing. In addition, since the AP1 symbol serves as an extended version of the P1 symbol, a process for transmitting the AP1 symbol and a process for transmitting the P1 symbol should be performed in as similar a manner as possible. Accordingly, there is a need to perform a process for transmitting an AP1 symbol and a process for transmitting a P1 symbol so as not to cause interference between the AP1 and P1 symbols while maximizing the similarity between the process for transmitting the AP1 symbol and the process for transmitting the P1 symbol.

FIG. 13(A) illustrates interference between AP1 and P1 symbols when the same offset as the offset of a prefix and a postfix of a P1 symbol is used as the offset of a prefix and a postfix of an AP1 symbol. In an embodiment of the present invention, the offset value may be set to 30. From FIG. 13(A), it can be seen that interference occurs between the AP1 and P1 symbols. In this case, it can be assumed that both a P1 detector and an AP1 detector have a false correlation value.

FIG. 13(B) shows interference of AP1 and P1 symbols when a length offset of the prefix and postfix of the AP1 symbol is 27. It can be seen from FIG. 13(B) that almost no interference occurs between the P1 and AP1 symbols. In addition, the transmission structure of the AP1 symbol is almost the same as the transmission structure of the P1 symbol.

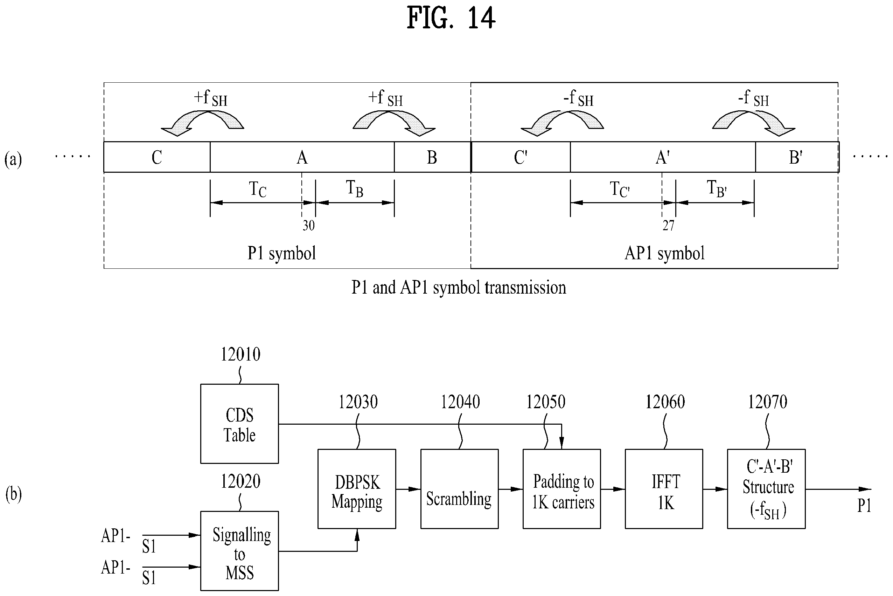

FIG. 14 illustrates an AP1 structure and AP1 symbol generator according to an embodiment of the present invention.

As shown in FIG. 14(A), a P1 symbol on the left side is generated by copying a front portion and a rear portion of an effective symbol A and frequency-shifting the copied portions by +fSH and then locating the shifted portions at a front portion C and a rear portion B of the effective symbol A. In the present invention, the portion C is referred to as a prefix and the portion B is referred to as a postfix. That is, the P1 symbol consists of the prefix, the effective symbol, and the postfix.

As shown in FIG. 14(A), an AP1 symbol on the left side is generated by copying a front portion and a rear portion of an effective symbol A' and frequency-shifting the copied portions by -fSH and then locating the shifted portions at a front portion C and a rear portion B' of the effective symbol A'. In the present invention, the portion C' is referred to as a prefix and the portion B' is referred to as a postfix. That is, the AP1 symbol consists of the prefix, the effective symbol, and the postfix.

Here, two frequency shift values +fSH and -fSH used for the P1 symbol and the AP1 symbol have the same magnitude with opposite signs. That is, frequency shifting for the P1 symbol and the AP1 symbol is performed in opposite directions. The lengths of the portions C and C' copied to the front portion of the effective symbol may be set to be different from each other and the lengths of the portions B and B' copied to the rear portion of the effective symbol may also be set to be different from each other. Alternatively, the lengths of the portions C and C' may be set to be different from each other while the lengths of the portions B and B' are set to be equal to each other or the lengths of the portions C and C' may be set to be equal to each other while the lengths of the portions B and B' are set to be different from each other. In another embodiment of the present invention, the effective symbol length of the P1 symbol and the effective symbol length of the AP1 symbol may also be set to be different from each other. In another embodiment, a Complementary Set of Sequences (CSS) different from that of the P1 symbol may be used for tone selection and data scrambling in AP1.

As described above, in one embodiment of the present invention, a P1 symbol has an offset of 30 samples and an AP1 symbol has an offset of 27 samples. That is, in the case of the P1 symbol, 548 (= 1024/2+30) samples may be included in the prefix C and 482 (= 1024/2-30) samples may be included in the postfix C since the effective symbol may include 1024 samples and the offset of the prefix and the postfix may be 30 samples. In the case of the AP1 symbol, 539 (= 1024/2+27) samples may be included in the prefix C' and 485 (= 1024/2-27) samples may be included in the postfix B' since the effective symbol may include 1024 samples and the offset of the prefix C' and the postfix B' may be 27 samples.

According to the present invention, the P1 symbol does not reduce AP1 symbol detection performance and the AP1 symbol also does not reduce P1 symbol detection performance since the P1 symbol and the AP1 symbol generated in the structures shown in FIG. 14(A) are inserted into signal frames. In addition, detection performance of the P1 symbol and detection performance of the AP1 symbol are almost the same. In addition, it is possible to minimize complexity of the receiver since the P1 symbol and the AP1 symbol have similar structures.

Here, the P1 symbol and the AP1 symbol may be continuously transmitted or may be transmitted at different positions in a signal frame. When the P1 symbol and the AP1 symbol are transmitted at different positions, it is possible to achieve high time diversity effects for preamble symbols. In an embodiment of the present invention, the P1 symbol and the AP1 symbol are continuously transmitted.

FIG. 14(B) illustrates an embodiment of an AP1 symbol generator. The AP1 symbol generator according to an embodiment of the present invention includes a Carrier Distribution Sequence (CDS) table module 12010, a Modulation Signaling Sequence (MSS) module 12020, a Differential Binary Phase Shift Keying (DBPSK) mapping module 12030, a scrambling module 12040, a padding module 12050, an IFFT module 12060, and/or a C'-A'-B' structure module 12070.

The scrambling module 12060 scrambles an AP1 symbol using a scrambling sequence. In an embodiment of the present invention, the scrambling sequence used here is '111001100110001' that is optimized taking into consideration the PAPR and the OOB power level.

The C'-A'-B' structure module 12070 forms prefix, effective symbol, and postfix structures of the AP1 symbol.

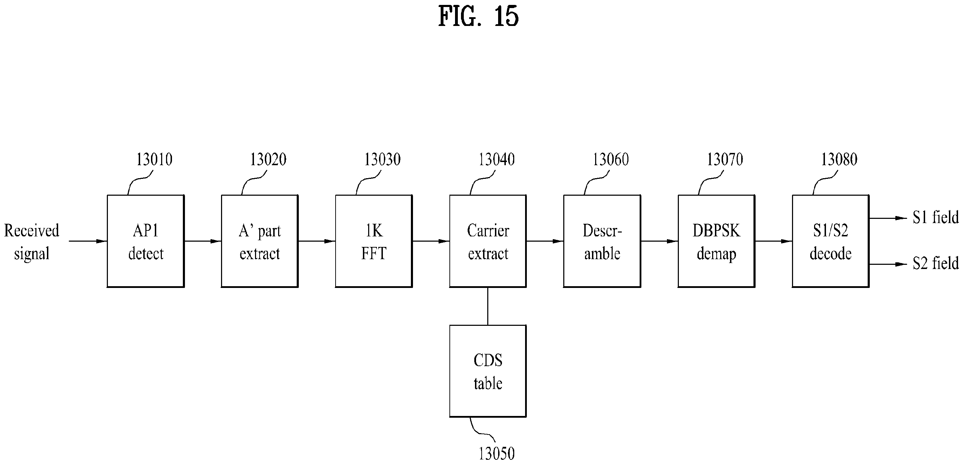

FIG. 15 illustrates an AP1 detection and decoding module according to an embodiment of the present invention.

The AP1 detection and decoding module may include an AP1 detector 13010, an effective symbol detector 13020, an FFT module 13030, a carrier extractor 13040, a CDS table module 13050, a descramble module 13060, a DBPSK demapper 13070, and/or an S1/S2 decoder 13080.

First, the AP1 detector 13010 detects an AP1 symbol from a received signal input to the AP1 detector 13010 using C-A-B correlation characteristics of the received signal.

The effective symbol detector 13020 extracts an A' part, which is an effective symbol part of the AP1 symbol, from the AP1 symbol.

The FFT module 13030 performs 1K-FFT to transform the data into frequency-domain data.

The carrier extractor 13040 extracts only a signal at an active carrier position from the frequency-domain data using a CDS table received from the CDS table module 13050.

The descramble module 13060 performs descrambling of the data.

The DBPSK demapper 13070 performs DBPSK differential demodulation.

The S1/S2 decoder 13080 decodes S1 and S2 fields to acquire a signaling field. Here, in a decoding method according to an embodiment of the present invention, correlation is performed on all possible combinations of sequences of the S1 and S2 fields and combining is performed on the S1 field that is transmitted twice for the effective symbol, once for each of both ends of the effective symbol, to acquire SNR/decoding gain. Alternatively, the S1 field may be decoded twice and whether or not the two decoded fields are identical may then be determined and the reliability of the decoded data may be used for decoding.

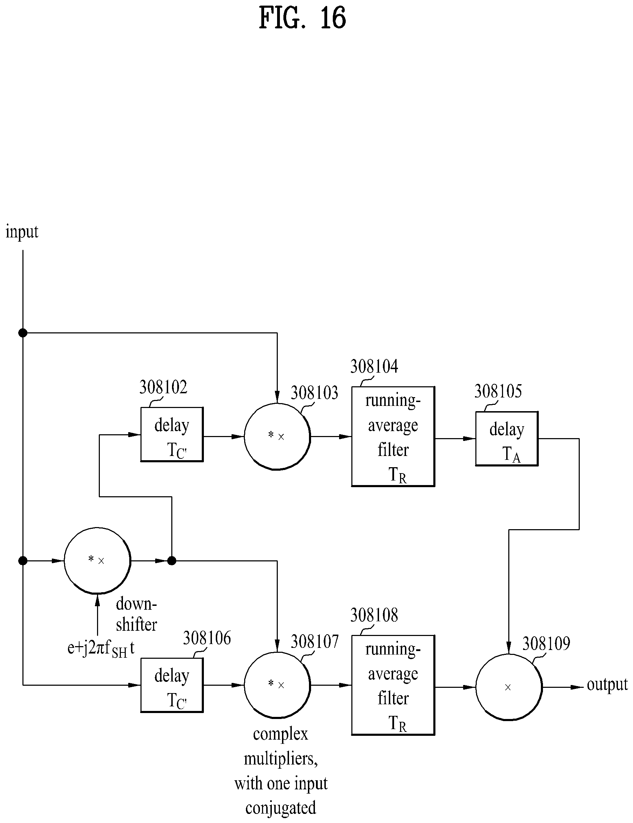

FIG. 16 illustrates an AP1 symbol detector according to an embodiment of the present invention.

The AP1 symbol detector may also be referred to as a C'-A'-B' preamble detector. That is, a digital signal produced by conversion of an ADC or a signal output from a P1 symbol detector is input to a down shifter 308101, a first conjugator 308103, and a second delayer 308106.

The down shifter 308101 performs inverse modulation on the input signal by multiplying the input signal by *e*^{*j*2*πf_{SH}t*}. When the down shifter 308101 performs inverse modulation on the frequency-shifted input signal, the frequency-shifted input signal is restored into an original signal. That is, although the down shifter 308101 has the same structure as the down shifter of the P1 symbol detector, the down shifter 308101 differs from the down shifter of the P1 symbol detector in that the down shifter 308101 performs inverse modulation in the opposite frequency direction. The signal produced through inverse modulation by the 308101 is output to a first delayer 308102 and a second conjugator 308107.

The first delayer 308102 delays the inverse-modulated signal by the length of the C' part T_{C'} and outputs the delayed signal to the first conjugator 308103. The first conjugator 308103 complex-conjugates the delayed signal and multiples the conjugated signal by the input signal and then outputs the multiplied signal to a first filter 308104. The first filter 308104 removes an unnecessary modulation component from the input signal using a running average filter and then outputs the filtered signal to a third delayer 308105. The third delayer 308105 delays the filtered signal by the length T_{A'} of the A' part (i.e., the effective symbol) and outputs the delayed signal to a multiplier 308109.

The second delayer 308106 delays the input signal by the length T_{B'} of the B' part and outputs the delayed signal to the second conjugator 308107. The second conjugator 308107 complex-conjugates the delayed signal and multiplies the conjugated signal by the inverse-modulated signal and then outputs the multiplied signal to a second filter 308108. The second filter 308108 removes an unnecessary modulation component from the input signal using a running average filter and then outputs the filtered signal to the multiplier 308109.

The multiplier 308109 multiplies the output of the second filter 308109 by the signal that has been delayed by the length T_{A'} of the A' part. In this manner, it is possible to detect an AP1 symbol from each signal frame of a received broadcast signal. Here, the length T_{C'} of the C' part and the length T_{B'} of the B' part are the same as described above.

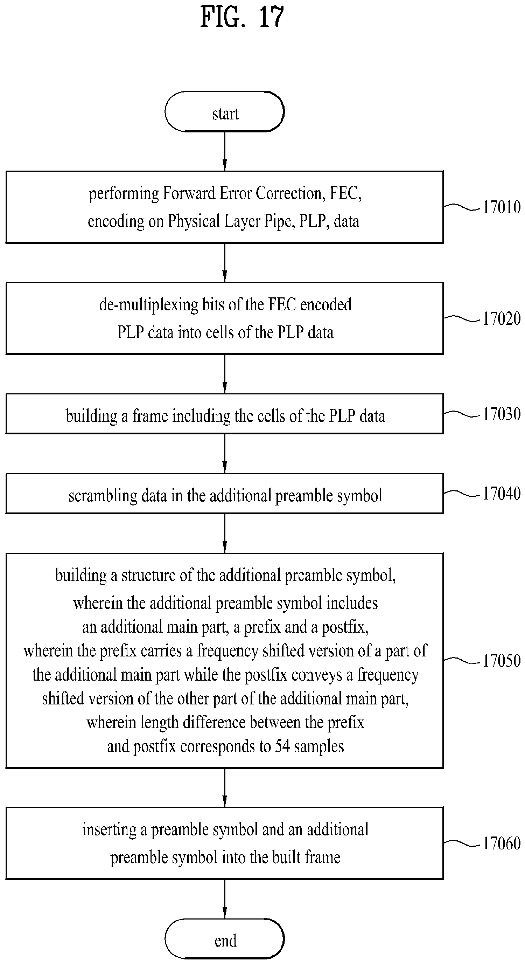

FIG. 17 is a flowchart illustrating a procedure for performing a transmission process on a broadcast signal according to an embodiment of the present invention.

According to an embodiment of the present invention, Forward Error Correction (FEC) coding is performed on PLP data (17010).

Bits of the PLP data are demultiplexed into cells of the PLP data (17020).

A frame including the cells of the PLP data is generated (17030).

Data of an additional preamble symbol is scrambled (17040).

A structure of the additional preamble symbol is generated (17050). Herein, the additional preamble symbol includes an additional main part, a prefix and a postfix. The prefix carries a frequency shifted version of a part of the additional main part while the postfix conveys a frequency shifted version of the other part of the additional main part. The length difference between the prefix and postfix corresponds to 54 samples.

The preamble symbol and the additional preamble symbol are inserted into the frame (17060).

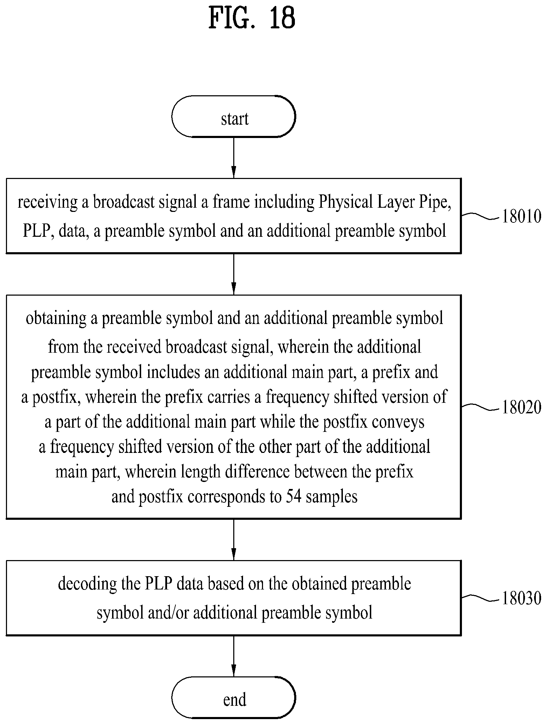

FIG. 18 illustrates a procedure for receiving a broadcast signal according to an embodiment of the present invention.

According to an embodiment of the present invention, a broadcast receiver receives a broadcast signal including a frame including PLP data, a preamble symbol, and an additional preamble symbol (18010).

The broadcast receiver acquires the preamble symbol and the additional preamble symbol from the broadcast signal (18020). The additional preamble symbol includes an additional main part, a prefix and a postfix. The prefix carries a frequency shifted version of a part of the additional main part while the postfix conveys a frequency shifted version of the other part of the additional main part. The length difference between the prefix and postfix corresponds to 54 samples. Here, the procedure for acquiring the preamble symbol and the additional preamble symbol may include a procedure for extracting an additional main part from the additional preamble symbol and a procedure for descrambling the additional main part.

The broadcast receiver decodes the PLP data based on the preamble symbol and/or the additional preamble symbol (18030).

As is apparent from the above description, the present invention has a variety of advantages.

For example, it is possible to increase robustness of broadcast signal transmission and reception while increasing data transmission efficiency by using a MIMO system in a digital broadcast system.

In addition, a receiver can efficiently restore MIMO-received signals in various broadcast environments through MIMO processing.

Further, it is possible to provide a broadcast signal transmitter/receiver and a broadcast signal transmission/reception method which can secure compatibility with the conventional transmission/reception system by using the conventional transmission/reception system as much as possible while using the MIMO system.

Furthermore, it is possible to provide a broadcast signal transmitter/receiver and a broadcast signal transmission/reception method which can receive digital broadcast signals without error in mobile reception equipment or indoor environments.

In addition, it is possible to extend P1 symbols through AP1 symbols and also to easily identify AP1 symbols and P1 symbols.

Further, it is possible to maintain compatibility with the conventional receiver even when AP1 symbols are added.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A method of processing a broadcast signal in a transmitter, the method comprising:
performing Forward Error Correction, FEC, encoding (604210) on Physical Layer Pipe, PLP, data;
de-multiplexing (604230) bits of the FEC encoded PLP data into cells of the PLP data;
building (101400) a frame including the cells of the PLP data;
inserting a preamble symbol (302161) and an additional preamble symbol (302171) into the built frame, wherein the additional preamble symbol is generated by steps including:
scrambling (12040) data in an additional main part; and
building (12070) a structure of the additional preamble symbol,
wherein the preamble symbol includes a main part, a prefix and a postfix,
wherein the additional preamble symbol includes the additional main part, an additional prefix and an additional postfix,
wherein the additional prefix carries a frequency shifted version of a part of the additional main part while the additional postfix conveys a frequency shifted version of the other part of the additional main part,
wherein length difference between the prefix and postfix is different from length difference between the additional prefix and the additional postfix,
**characterised in that** the data in the additional preamble symbol are scrambled by using a first sequence which is different from a second sequence used in the preamble symbol.

2. The method of claim 1, wherein the first sequence is '111001100110001'.

3. The method of claim 1, wherein length difference between the additional prefix and additional postfix corresponds to 54 samples.

4. A method of receiving a broadcast signal, the method comprising:
receiving (107000) a broadcast signal including a frame including Physical Layer Pipe, PLP, data, a preamble symbol and an additional preamble symbol;
obtaining a preamble symbol (306601) and an additional preamble symbol (306602) from the received broadcast signal, wherein the preamble symbol includes a main part, a prefix and a postfix, wherein the additional preamble symbol includes an additional main part, an additional prefix and an additional postfix, wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix, wherein the obtaining the additional preamble symbol comprises:
extracting (13020) the additional main part; and
descrambling data in the additional main part;
decoding the PLP data based on the obtained preamble symbol and the additional preamble symbol, **characterised in that** the data in the additional preamble symbol are scrambled by using a first sequence which is different from a second sequence used in the preamble symbol.

5. The method of claim 4, wherein the first sequence is '111001100110001'.

6. The method of claim 4, wherein length difference between the additional prefix and additional postfix corresponds to 54 samples.

7. The method of claim 4, wherein the obtaining the additional preamble symbol further comprises:
detecting an additional preamble symbol from the received broadcast signal by using value of the length difference between the prefix and postfix.

8. A transmitter for processing a broadcast signal, the transmitter comprising:
means (604210) for performing Forward Error Correction, FEC, encoding on Physical Layer Pipe, PLP, data;
means (604230) for de-multiplexing bits of the FEC encoded PLP data into cells of the PLP data;
means (101400) for building a frame including the cells of the PLP data;
means (302161, 302171) for inserting a preamble symbol and an additional preamble symbol into the built frame, wherein the means (302171) comprise:
means (12040) for scrambling data in an additional main part; and
means (12070) for building a structure of the additional preamble symbol,
wherein the preamble symbol includes a main part, a prefix and a postfix,
wherein the additional preamble symbol includes the additional main part, an additional prefix and an additional postfix,
wherein the additional prefix carries a frequency shifted version of a part of the additional main part while the additional postfix conveys a frequency shifted version of the other part of the additional main part,
wherein length difference between the prefix and postfix is different from length difference between the additional prefix and the additional postfix,
**characterised in that** the data in the additional preamble symbol are scrambled by using a first sequence which is different from a second sequence used in the preamble symbol.

9. The transmitter of claim 8, wherein the first sequence is '111001100110001'.

10. The transmitter of claim 8, wherein length difference between the additional prefix and additional postfix corresponds to 54 samples.

11. A receiver for receiving a broadcast signal, the receiver comprising:
means (107000) for receiving a broadcast signal including a frame including Physical Layer Pipe, PLP, data, a preamble symbol and an additional preamble symbol;
means (306601, 306602) for obtaining a preamble symbol and an additional preamble symbol from the received broadcast signal, wherein the preamble symbol includes a main part, a prefix and a postfix, wherein the additional preamble symbol includes an additional main part, an additional prefix and an additional postfix, wherein the additional prefix carries a frequency shifted version of a part of the additional main part while the additional postfix conveys a frequency shifted version of the other part of the additional main part, wherein length difference between the prefix and postfix is different from length difference between the additional prefix and the additional postfix, wherein the means (306602) comprises:
means (13020) for extracting the additional main part; and
means (13060) for descrambling data in the extracted additional main part;
means (107300) for decoding the PLP data based on the obtained preamble symbol and the additional preamble symbol,
**characterised in that** the data in the additional preamble symbol are scrambled by using a first sequence which is different from a second sequence used in the preamble symbol.

12. The receiver of claim 11, wherein the first sequence is '111001100110001'.

13. The receiver of claim 11, wherein length difference between the additional prefix and additional postfix corresponds to 54 samples.

14. The receiver of claim 11, wherein the obtaining the additional preamble symbol further comprises:
means (13010) for detecting an additional preamble symbol from the received broadcast signal by using value of the length difference between the prefix and postfix.

## Patentansprüche

1. Verfahren zum Verarbeiten eines Rundfunksignals in einem Sender, wobei das Verfahren umfasst:
Durchführen eines Vorwärtsfehlerkorrektur-, *Forward Error Correction* - FEC-, Codierens (604210) von Physical-Layer-Pipe-, PLP-, Daten;
Demultiplexen (604230) von Bits der FEC-codierten PLP-Daten in Zellen der PLP-Daten;
Erstellen (101400) eines Rahmens, der die Zellen der PLP-Daten beinhaltet;
Einfügen eines Präambelsymbols (302161) und eines zusätzlichen Präambelsymbols (302171) in den erstellten Rahmen, wobei das zusätzliche Präambelsymbol durch Schritte erzeugt wird, die beinhalten:
Verschlüsseln (12040) von Daten in einem zusätzlichen Hauptteil; und
Erstellen (12070) einer Struktur des zusätzlichen Präambelsymbols,
wobei das Präambelsymbol einen Hauptteil, einen Präfix und einen Postfix beinhaltet,
wobei das zusätzliche Präambelsymbol den zusätzlichen Hauptteil, einen zusätzlichen Präfix und einen zusätzlichen Postfix beinhaltet,
wobei der zusätzliche Präfix eine frequenzverschobene Version eines Teils des zusätzlichen Hauptteils trägt, während der zusätzliche Postfix eine frequenzverschobene Version des anderen Teils des zusätzlichen Hauptteils übermittelt,
wobei eine Längendifferenz zwischen dem Präfix und dem Postfix sich von einer Längendifferenz zwischen dem zusätzlichen Präfix und dem zusätzlichen Postfix unterscheidet,
**dadurch gekennzeichnet, dass** die Daten in dem zusätzlichen Präambelsymbol unter Verwendung einer ersten Sequenz verschlüsselt werden, die sich von einer in dem Präambelsymbol verwendeten zweiten Sequenz unterscheidet.

2. Verfahren nach Anspruch 1, wobei die erste Sequenz "111001100110001" lautet.

3. Verfahren nach Anspruch 1, wobei eine Längendifferenz zwischen dem zusätzlichen Präfix und dem zusätzlichen Postfix 54 Abtastungen entspricht.

4. Verfahren zum Empfangen eines Rundfunksignals, wobei das Verfahren umfasst:
Empfangen (107000) eines Rundfunksignals, das einen Rahmen beinhaltet, der Physical-Layer-Pipe-, PLP-, Daten, ein Präambelsymbol und ein zusätzliches Präambelsymbol beinhaltet;
Gewinnen eines Präambelsymbols (306601) und eines zusätzlichen Präambelsymbols (306602) aus dem empfangenen Rundfunksignal, wobei das Präambelsymbol einen Hauptteil, einen Präfix und einen Postfix beinhaltet, wobei das zusätzliche Präambelsymbol einen zusätzlichen Hauptteil, einen zusätzlichen Präfix und einen zusätzlichen Postfix beinhaltet,
wobei der zusätzliche Präfix eine frequenzverschobene Version eines Teils des zusätzlichen Hauptteils trägt, während der zusätzliche Postfix eine frequenzverschobene Version des anderen Teils des zusätzlichen Hauptteils übermittelt, wobei eine Längendifferenz zwischen dem Präfix und dem Postfix sich von einer Längendifferenz zwischen dem zusätzlichen Präfix und dem zusätzlichen Postfix unterscheidet, wobei das Gewinnen des zusätzlichen Präambelsymbols umfasst:
Extrahieren (13020) des zusätzlichen Hauptteils; und
Entschlüsseln von Daten in dem zusätzlichen Hauptteil;
Decodieren der PLP-Daten basierend auf dem gewonnenen Präambelsymbol und dem zusätzlichen Präambelsymbol,
**dadurch gekennzeichnet, dass** die Daten in dem zusätzlichen Präambelsymbol unter Verwendung einer ersten Sequenz verschlüsselt werden, die sich von einer in dem Präambelsymbol verwendeten zweiten Sequenz unterscheidet.

5. Verfahren nach Anspruch 4, wobei die erste Sequenz "111001100110001" lautet.

6. Verfahren nach Anspruch 4, wobei eine Längendifferenz zwischen dem zusätzlichen Präfix und dem zusätzlichen Postfix 54 Abtastungen entspricht.

7. Verfahren nach Anspruch 4, wobei das Gewinnen des zusätzlichen Präambelsymbols ferner umfasst:
Erkennen eines zusätzlichen Präambelsymbols aus dem empfangenen Rundfunksignal unter Verwendung eines Wertes der Längendifferenz zwischen dem Präfix und dem Postfix.

8. Sender zum Verarbeiten eines Rundfunksignals, wobei der Sender umfasst:
Mittel (604210) zum Durchführen eines Vorwärtsfehlerkorrektur-, *Forward Error Correction* - FEC-, Codierens von Physical-Layer-Pipe-, PLP-, Daten;
Mittel (604230) zum Demultiplexen von Bits der FEC-codierten PLP-Daten in Zellen der PLP-Daten;
Mittel (101400) zum Erstellen eines Rahmens, der die Zellen der PLP-Daten beinhaltet;
Mittel (302161, 302171) zum Einfügen eines Präambelsymbols und eines zusätzlichen Präambelsymbols in den erstellten Rahmen, wobei die Mittel (302171) umfassen:
Mittel (12040) zum Verschlüsseln von Daten in einem zusätzlichen Hauptteil; und
Mittel (12070) zum Erstellen einer Struktur des zusätzlichen Präambelsymbols, wobei das Präambelsymbol einen Hauptteil, einen Präfix und einen Postfix beinhaltet, wobei das zusätzliche Präambelsymbol den zusätzlichen Hauptteil, einen zusätzlichen Präfix und einen zusätzlichen Postfix beinhaltet,
wobei der zusätzliche Präfix eine frequenzverschobene Version eines Teils des zusätzlichen Hauptteils trägt, während der zusätzliche Postfix eine frequenzverschobene Version des anderen Teils des zusätzlichen Hauptteils übermittelt,
wobei eine Längendifferenz zwischen dem Präfix und dem Postfix sich von einer Längendifferenz zwischen dem zusätzlichen Präfix und dem zusätzlichen Postfix unterscheidet,
**dadurch gekennzeichnet, dass** die Daten in dem zusätzlichen Präambelsymbol unter Verwendung einer ersten Sequenz verschlüsselt werden, die sich von einer in dem Präambelsymbol verwendeten zweiten Sequenz unterscheidet.

9. Sender nach Anspruch 8, wobei die erste Sequenz "111001100110001" lautet.

10. Sender nach Anspruch 8, wobei eine Längendifferenz zwischen dem zusätzlichen Präfix und dem zusätzlichen Postfix 54 Abtastungen entspricht.

11. Empfänger zum Empfangen eines Rundfunksignals, wobei der Empfänger umfasst:
Mittel (107000) zum Empfangen eines Rundfunksignals, das einen Rahmen beinhaltet, der Physical-Layer-Pipe-, PLP-, Daten, ein Präambelsymbol und ein zusätzliches Präambelsymbol beinhaltet;
Mittel (306601, 306602) zum Gewinnen eines Präambelsymbols und eines zusätzlichen Präambelsymbols aus dem empfangenen Rundfunksignal, wobei das Präambelsymbol einen Hauptteil, einen Präfix und einen Postfix beinhaltet, wobei das zusätzliche Präambelsymbol einen zusätzlichen Hauptteil, einen zusätzlichen Präfix und einen zusätzlichen Postfix beinhaltet, wobei der zusätzliche Präfix eine frequenzverschobene Version eines Teils des zusätzlichen Hauptteils trägt, während der zusätzliche Postfix eine frequenzverschobene Version des anderen Teils des zusätzlichen Hauptteils übermittelt, wobei eine Längendifferenz zwischen dem Präfix und dem Postfix sich von einer Längendifferenz zwischen dem zusätzlichen Präfix und dem zusätzlichen Postfix unterscheidet, wobei das Mittel (306602) umfasst:
Mittel (13020) zum Extrahieren des zusätzlichen Hauptteils; und
Mittel (13060) zum Entschlüsseln von Daten in dem extrahierten zusätzlichen Hauptteil;
Mittel (107300) zum Decodieren der PLP-Daten basierend auf dem gewonnenen Präambelsymbol und dem zusätzlichen Präambelsymbol,
**dadurch gekennzeichnet, dass** die Daten in dem zusätzlichen Präambelsymbol unter Verwendung einer ersten Sequenz verschlüsselt werden, die sich von einer in dem Präambelsymbol verwendeten zweiten Sequenz unterscheidet.

12. Empfänger nach Anspruch 11, wobei die erste Sequenz "111001100110001" lautet.

13. Empfänger nach Anspruch 11, wobei eine Längendifferenz zwischen dem zusätzlichen Präfix und dem zusätzlichen Postfix 54 Abtastungen entspricht.

14. Empfänger nach Anspruch 11, wobei das Gewinnen des zusätzlichen Präambelsymbols ferner umfasst:
Mittel (13010) zum Erkennen eines zusätzlichen Präambelsymbols aus dem empfangenen Rundfunksignal unter Verwendung eines Wertes der Längendifferenz zwischen dem Präfix und dem Postfix.

## Revendications

1. Procédé de traitement d'un signal radiodiffusé dans un transmetteur, le procédé comprenant :
la réalisation d'une correction d'erreurs sans voie de retour, FEC, codant (604210) des données de tuyau de couche physique, PLP ;
un démultiplexage (604230) de bits des données PLP codées par FEC en cellules des données PLP ;
la construction (101400) d'une trame comportant les cellules des données PLP;
l'insertion d'un symbole de préambule (302161) et d'un symbole de préambule additionnel (302171) dans la trame construite, où le symbole de préambule additionnel est généré par les étapes comportant :
le brouillage (12040) de données dans une partie principale additionnelle ; et
la construction (12070) d'une structure du symbole de préambule additionnel,
dans lequel le symbole de préambule comporte une partie principale, un préfixe et un postfixe,
dans lequel le symbole de préambule additionnel comporte une partie principale additionnelle, un préfixe additionnel et un postfixe additionnel,
dans lequel le préfixe additionnel supporte une version décalée en fréquence d'une partie de la partie principale additionnelle tandis que le postfixe additionnel transporte une version décalée en fréquence de l'autre partie de la partie principale additionnelle,
dans lequel la différence de longueur entre le préfixe et le postfixe est différente de la différence en longueur entre le préfixe additionnel et le postfixe additionnel,
**caractérisé en ce que** les données dans le symbole de préambule additionnel sont brouillées à l'aide d'une première séquence qui est différente d'une deuxième séquence utilisée dans le symbole de préambule.

2. Procédé selon la revendication 1, dans lequel la première séquence est '111001100110001'.

3. Procédé selon la revendication 1, dans lequel la différence de longueur entre le préfixe additionnel et le postfixe additionnel correspond à 54 échantillons.

4. Procédé de réception d'un signal radiodiffusé, le procédé comprenant :
la réception (107000) d'un signal radiodiffusé comportant une trame comportant des données de tuyau de couche physique, PLP, un symbole de préambule et un symbole de préambule additionnel ;
l'obtention d'un symbole de préambule (306601) et d'un symbole de préambule additionnel (306602) depuis le signal radiodiffusé reçu, où le symbole de préambule comporte une partie principale, un préfixe et un postfixe, où le symbole de préambule additionnel comporte une partie principale additionnelle, un préfixe additionnel et un postfixe additionnel, où le préfixe additionnel supporte une version décalée en fréquence d'une partie de la partie principale additionnelle tandis que le postfixe additionnel transporte une version décalée en fréquence de l'autre partie de la partie principale additionnelle, où la différence de longueur entre le préfixe et le postfixe est différente de la différence de longueur entre le préfixe additionnel et le postfixe additionnel, où l'obtention du symbole de préambule additionnel comprend :
l'extraction (13020) de la partie principale additionnelle ; et
le débrouillage de données dans la partie principale additionnelle ;
le décodage de données PLP en fonction du symbole de préambule obtenu et du symbole de préambule additionnel,
**caractérisé en ce que** les données dans le symbole de préambule additionnel sont brouillées à l'aide d'une première séquence qui est différente d'une deuxième séquence utilisée dans le symbole de préambule.

5. Procédé selon la revendication 4, dans lequel la première séquence est '111001100110001'.

6. Procédé selon la revendication 4, dans lequel la différence de longueur entre le préfixe additionnel et le postfixe additionnel correspond à 54 échantillons.

7. Procédé selon la revendication 4, dans lequel l'obtention du symbole de préambule additionnel comprend en outre :
la détection d'un symbole de préambule additionnel depuis le signal radiodiffusé reçu à l'aide de la valeur de la différence de longueur entre le préfixe et le postfixe.

8. Transmetteur destiné à traiter un signal radiodiffusé, le transmetteur comprenant :
des moyens (604210) de réalisation d'une correction d'erreurs sans voie de retour, FEC, codant des données de tuyau de couche physique, PLP ;
des moyens (604230) de démultiplexage de bits des données PLP codées par FEC en cellules des données PLP ;
des moyens (101400) de construction d'une trame comportant les cellules des données PLP ;
des moyens (302161, 302171) d'insertion d'un symbole de préambule et d'un symbole de préambule additionnel dans la trame construite, où les moyens (302171) comprennent :
des moyens (12040) de brouillage de données dans une partie principale additionnelle ; et
des moyens (12070) de construction d'une structure du symbole de préambule additionnel,
dans lequel le symbole de préambule comporte une partie principale, un préfixe et un postfixe,
dans lequel le symbole de préambule additionnel comporte une partie principale additionnelle, un préfixe additionnel et un postfixe additionnel,
dans lequel le préfixe additionnel supporte une version décalée en fréquence d'une partie de la partie principale additionnelle tandis que le postfixe additionnel transporte une version décalée en fréquence de l'autre partie de la partie principale additionnelle,
dans lequel la différence de longueur entre le préfixe et le postfixe est différente de la différence en longueur entre le préfixe additionnel et le postfixe additionnel,
**caractérisé en ce que** les données dans le symbole de préambule additionnel sont brouillées à l'aide d'une première séquence qui est différente d'une deuxième séquence utilisée dans le symbole de préambule.

9. Transmetteur selon la revendication 8, dans lequel la première séquence est '111001100110001'.

10. Transmetteur selon la revendication 8, dans lequel la différence de longueur entre le préfixe additionnel et le postfixe additionnel correspond à 54 échantillons.

11. Récepteur destiné à recevoir un signal radiodiffusé, le récepteur comprenant :
des moyens (107000) de réception d'un signal radiodiffusé comportant une trame comportant des données de tuyau de couche physique, PLP, un symbole de préambule et un symbole de préambule additionnel ;
des moyens (306601, 306602) d'obtention d'un symbole de préambule et d'un symbole de préambule additionnel depuis le signal radiodiffusé reçu, où le symbole de préambule comporte une partie principale, un préfixe et un postfixe, où le symbole de préambule additionnel comporte une partie principale additionnelle, un préfixe additionnel et un postfixe additionnel, où le préfixe additionnel supporte une version décalée en fréquence d'une partie de la partie principale additionnelle tandis que le postfixe additionnel transporte une version décalée en fréquence de l'autre partie de la partie principale additionnelle, où la différence de longueur entre le préfixe et le postfixe est différente de la différence de longueur entre le préfixe additionnel et le postfixe additionnel, où l'obtention du symbole de préambule additionnel comprend :
des moyens (13020) d'extraction de la partie principale additionnelle ; et
des moyens (13060) de débrouillage de données dans la partie principale additionnelle ;
des moyens (107300) de décodage de données PLP en fonction du symbole de préambule obtenu et du symbole de préambule additionnel,
**caractérisé en ce que** les données dans le symbole de préambule additionnel sont brouillées à l'aide d'une première séquence qui est différente d'une deuxième séquence utilisée dans le symbole de préambule.

12. Récepteur selon la revendication 11, dans lequel la première séquence est '111001100110001'.

13. Récepteur selon la revendication 11, dans lequel la différence de longueur entre le préfixe additionnel et le postfixe additionnel correspond à 54 échantillons.

14. Récepteur selon la revendication 11, dans lequel l'obtention du symbole de préambule additionnel comprend en outre :
des moyens (13010) de détection d'un symbole de préambule additionnel depuis le signal radiodiffusé reçu à l'aide de la valeur de la différence de longueur entre le préfixe et le postfixe.
